(19) Europäisches Patentamt
European Patent Office
Office européen des brevets

(11) EP 1 428 855 A1

(12) # EUROPEAN PATENT APPLICATION
published in accordance with Art. 158(3) EPC

(43) Date of publication:
**16.06.2004 Bulletin 2004/25**

(21) Application number: **02799471.4**

(22) Date of filing: **17.09.2002**

(51) Int Cl.[7]: **C08L 23/20**, C08L 23/00, C08F 4/642, C08J 5/18, B32B 27/32

(86) International application number:
**PCT/JP2002/009500**

(87) International publication number:
**WO 2003/027179 (03.04.2003 Gazette 2003/14)**

(84) Designated Contracting States:
**AT BE BG CH CY CZ DE DK EE ES FI FR GB GR IE IT LI LU MC NL PT SE SK TR**

(30) Priority: **19.09.2001 JP 2001285506**
**19.09.2001 JP 2001285507**
**17.05.2002 JP 2002142465**

(71) Applicant: **IDEMITSU PETROCHEMICAL CO., LTD.**
**Tokyo 130-0015 (JP)**

(72) Inventors:
- **SERA, Masanori**
  **Ichihara-shi, Chiba 299-0107 (JP)**
- **MINAMI, Yutaka**
  **Ichihara-shi, Chiba 299-0107 (JP)**
- **KANAMARU, Masami**
  **Ichihara-shi, Chiba 299-0107 (JP)**

(74) Representative:
**Gille Hrabal Struck Neidlein Prop Roos**
**Patentanwälte,**
**Brucknerstrasse 20**
**40593 Düsseldorf (DE)**

(54) **WRAPPING FILM AND SHRINK FILM EACH COMPRISING BUTENE POLYMER**

(57) The wrap film and the shrink film of the present invention are formed from a resin composition comprising a specific 1-butene base polymer satisfying the following items (1) to (4) and an olefin base polymer, and they are excellent in a safety and satisfy characteristics for a wrap film or a shrink film:

(1) a crystalline resin in which a melting point (Tm-D) defined as a peak top of a peak observed at a highest temperature side in a melting endothermic curve obtained by holding a sample at -10°C for 5 minutes under nitrogen atmosphere by means of a differential scanning calorimeter (DSC) and then elevating the temperature at 10°C/minute is 0 to 100°C;

(2) a stereospecific index {(mmmm)/(mmrr + rmmr)} is 20 or less;

(3) a molecular weight distribution (Mw/Mn) measured by a gel permeation chromatography (GPC) method is 4.0 or less; and

(4) a weight average molecular weight (Mw) measured by the GPC method is 10,000 to 1,000,000.

EP 1 428 855 A1

**Description**

BACKGROUND OF THE INVENTION

The present invention relates to a wrap film for business use or home use, particularly to a wrap film which does not contain chlorine and is soft to the environment and excellent in a safety and which can satisfy characteristics required to a wrap film, such as a wrapping property, a transparency and a deformation restoring property.

Further, the present invention relates to a shrink film used for packaging and others, particularly to a shrink film which does not contain chlorine and is soft to the environment and excellent in a safety, a transparency and a glossiness and which can package an article with a good appearance without causing deformation of the wrapped article even when the article to be wrapped is relatively weak in a low temperature shrink packaging property, particularly a strength.

RELATED ART

Vegetables and fruits, meat, fishes or processed foods thereof and cooked foods such as daily dishes have so far been sold at department stores, supermarkets and food stores with the goods put on light-weight foamed resin-made trays and wrapped with films. Also in homes, foods are put in a vessel and wrapped with a film in preserving by freezing and refrigerating or in heating in an electric oven.

Characteristics such as a see-through property, a wrap-finishing appearance, a wrapping efficiency, a sticking resistance and a deformation restoring property in pushing with a finger are required to this wrapping film. A large amount of polyvinyl chloride base resins such as polyvinyl chloride (PVC) and polyvinylidene chloride (PVDC) is usually used for films which can satisfy these wrapping characteristics.

However, polyvinyl chloride base resins such as polyvinyl chloride (PVC) and polyvinylidene chloride (PVDC) contain chlorine in a molecular structure, and therefore it has been regarded as a problem from an environmental point of view that they generate harmful hydrogen chloride gas by incinerating treatment carried out after used and disposed. Further, elution of plasticizers blended in a large quantity in order to soften wrap films is also regarded as a problem from a safety point of view.

A polyethylene base film and a polypropylene base film are tried to be used in order to solve these problems, and a part thereof is put to practical use. However, there are the problems that a polyethylene base film has a good low temperature characteristic but is low in a heat resistance and that a polypropylene base film has a high heat resistance but is low in a low temperature characteristic. Further, both of the polyethylene base film and the polypropylene base film have the problem that they are unsatisfactory in an adhesive strength to a tray and an adhesive strength between the films themselves.

Accordingly, proposed are various methods in which a polypropylene base resin is blended with an ethylene-propylene rubber, a styrene-ethylene-butylene-styrene block copolymer, modified polyolefin, polybutene, a hydrocarbon resin and a tackifying aid. However, these blending compounds are not necessarily sufficiently compatible with a polypropylene base resin, and there are new problems such as roughness on the surface, a reduction in the transparency, a reduction in the film-making property and bleeding of a low molecular weight compound which is a tackifying aid.

In respect to the other wrap films, a wrap film formed from a resin composition comprising 50 to 98 mass parts of a polypropylene base resin (A) and 2 to 50 mass parts of an ethylene-$\alpha$-olefin copolymer (B) having a density of 0.900 g/cm$^3$ or less is disclosed in Japanese Patent Application Laid-Open No. 29967/1999, and a wrap film comprising a resin composition comprising 100 mass parts of a polypropylene base resin (A) and 1 to 15 mass parts of an oil & fat (B) is disclosed in Japanese Patent Application Laid-Open No. 29968/1999. However, a low molecular weight compound such as polybutene and an oil & fat has to be substantially added in order to secure an adhesive property of a wrap film, and therefore they are not different from conventional methods.

Disclosed in Japanese Patent Application Laid-Open No. 44742/2000 is a film comprising a soft polypropylene base resin comprising 20 to 60 mass % of (a) a polypropylene component having an isotactic index of 80 or more and 40 to 80 mass % of (b) a copolymer component which is a copolymer component of ethylene and olefin having 4 or more carbon atoms comprising 50 to 95 mass % of ethylene and which comprises 25 to 95 mass % of a crystal component (I) containing crystalline polyethylene insoluble in xylene at 25°C and 5 to 75 mass % of an amorphous component (II) soluble in xylene at 25°C. However, in evaluating it as a wrap film, it is not a single layer film and is a multilayer film comprising a propylene-ethylene-butene-1 copolymer and an ethylene-vinyl acetate copolymer as both external layers. In respect to the characteristics thereof as a wrap film, the polypropylene base resin is not substantially efficiently used, and also the transparency thereof does not reach a satisfactory level.

Accordingly, these wrap films comprising a polyolefin base resin containing no chlorine can solve the problem of an environmental resistance but do not reach the level of a wrap film of a polyvinyl chloride base resin, and it is the existing situation that a wrap film comprising a polyvinyl chloride base resin is still widely used.

On the other hand, heat shrink packaging in which a film (shrink film) having a heat shrink property is used to package an article to be packaged and which the packaged article is then passed through a heating furnace to shrink the above film to thereby stick the film closely onto the article to be packaged or tie plural articles to be packaged is used for outer packaging of cap noodles and integrated packaging for notes and tissue paper in many cases.

Stretched films comprising polyvinyl chloride base resins such as polyvinyl chloride (PVC) and polyvinylidene chloride (PVDC), polyethylene base resins and polypropylene base resins are used at present as a shrink film used in the heat shrink packaging field. Required to the shrink film are a heat shrink property in a packaging work, a melt-breaking resistance, a heat fusion sealing property, a hot slipping property, a transparency after packaging, a high glossiness, a mechanical strength and an appearance after packaging (edges are stuck closely well without having wrinkles). A shrink film comprising a polyvinyl chloride base resin has so far been usually used as a film satisfying these characteristics.

However, polyvinyl chloride base resins such as polyvinyl chloride (PVC) and polyvinylidene chloride (PVDC) contain chlorine in a molecular structure, and therefore it has been regarded as a problem from an environmental point of view that they generate harmful hydrogen chloride gas by incinerating treatment after used and disposed. Further, elution of plasticizers blended in a large quantity in order to soften wrap films is also regarded as a problem from a safety point of view. Also, a polyvinyl chloride base resin generates an offensive odor at a shrinking step in heat shrink packaging, so that an improvement thereof is required from the viewpoint of packaging work environment.

A polyethylene base film and a polypropylene base film are tried to be used in order to solve these problems and put to practical use. However, pointed out are the problems that the polyethylene base film has a good low temperature characteristic but is low in a heat resistance and inferior in a melt fusion resistance and that the polypropylene base film has a high heat resistance but is inferior in a low temperature characteristic and an article to be packaged is deformed by a heat shrink stress as a heating temperature is elevated at a shrinking step, whereby the appearance after packaging is deteriorated and the product value is reduced. Further, they are inferior to a polyvinyl chloride base resin in terms of a transparency and a glossiness, and it is the existing situation that the use fields thereof are restricted.

Accordingly, various improvements of a shrink film using a polypropylene base resin are proposed. Proposed in Japanese Patent Application Laid-Open No. 304882/1995 is, for example, (1) a polyolefin base resin-stretched shrink film having a specific physical property, comprising a random copolymer containing 0.01 to 5 mass % of a polybutene component, 1 to 70 mass % of a polypropylene component and 25 to 98.99 mass % of a propylene-ethylene random copolymer component, wherein the above propylene-ethylene random copolymer component contains 10 to 40 mole % of a monomer unit based on ethylene and 90 to 60 mole % of a monomer unit based on propylene.

Further, proposed in Japanese Patent Application Laid-Open No. 176335/1997 is (2) a shrink film comprising a principal component of crystalline polypropylene in which a peak temperature in an eluting curve obtained by a temperature programmed elution fractioning method using orthodichlorobenzene as a solvent is 90 to 110°C and in which an elution integrating mass ratio calculated from the above eluting curve is 0 to 10 mass % at 20°C or lower, 60 to 80 mass % at 20 to 100°C and 10 to 40 mass % at 100 to 130°C. Used for this crystalline polypropylene is, to be specific, a block copolymer comprising (a) 1 to 70 mass % of a propylene base random copolymer comprising more than 90 mole % of a polypropylene component or a monomer unit based on propylene and (b) 30 to 99 mass % of a propylene base random copolymer comprising 10 to 40 mole % of a monomer unit based on ethylene.

Further, disclosed in Japanese Patent Application Laid-Open No. 152531/1998 is (3) a stretched film using a propylene base random copolymer which is a random copolymer of propylene and ethylene, wherein a content of an ethylene unit in the copolymer, a melt index, a boiling diethyl ether-extracting amount and a melting point satisfy a specific relation, and an isotactic triad fraction is 98 mole % or more.

All of these propylene base resins comprise a copolymer of ethylene and the other $\alpha$-olefins as a principal component and is improved in terms of that a stretching temperature can be reduced, that is, a heating temperature in shrink packaging can be lowered. However, as apparent from the examples described in the respective official gazettes, the transparency and the gloss are not still satisfactory, and they do not reach the level of polyvinyl chloride resins which have so far been used in many case from the viewpoint of a product value of the packaged articles.

## DISCLOSURE OF THE INVENTION

An object of the present invention is to provide a wrap film which has characteristics of a wrap film, such as a wrapping property, a transparency, a deformation restoring property and a sticking resistance, which does not contain chlorine and is not likely to generate harmful substances such as hydrogen chloride originating in chlorine in disposing and incinerating and which is soft to the global environment.

Further, an object of the present invention is to provide a shrink film comprising an olefin base resin, which has a good heat shrink property required to a shrink film and can be shrunk at a low temperature, which is further improved in a transparency and a glossiness endowed to conventional polypropylene resins and has characteristics comparable with those of a polyvinyl chloride base resin, which does not contain chlorine and is not likely to generate

harmful substances such as hydrogen chloride in disposing and incinerating and which is soft to the global environment.

Intensive investigations repeated by the present inventors in order to achieve the objects described above have resulted in finding that a film produced from a composition comprising a specific 1-butene base polymer can achieve the above objects. Techniques for producing a 1-butene base polymer are disclosed in Japanese Patent Publication No. 165408/1988, Japanese Patent Publication No. 60613/1989 and Japanese Patent Publication No. 81804/1989, and 1-butene base polymers produced by these production processes have problems on an impact resistance and a molding property thereof, so that the uses thereof have been limited to uses such as pipes for hot water. However, it has been found that a film produced from a composition comprising a specific 1-butene base polymer and an olefin base polymer has excellent characteristics as a wrap film or a shrink film. The present invention has been completed based on such knowledge.

That is, the present invention provides the following wrap film.

[1] A wrap film formed from a resin composition comprising 1 to 99 mass % of a 1-butene base polymer satisfying the following items (1) to (4):

(1) a crystalline resin in which a melting point (Tm-D) defined as a peak top of a peak observed at a highest temperature side in a melting endothermic curve obtained by holding a sample at -10°C for 5 minutes under nitrogen atmosphere by means of a differential scanning calorimeter (DSC) and then elevating the temperature at 10°C/minute is 0 to 100°C;
(2) a stereospecific index {(mmmm)/(mmrr + rmmr)} is 20 or less;
(3) a molecular weight distribution (Mw/Mn) measured by a gel permeation chromatography (GPC) method is 4.0 or less; and
(4) a weight average molecular weight (Mw) measured by the GPC method is 10,000 to 1,000,000

and 99 to 1 mass % of an olefin base polymer.

[2] A wrap film formed from a resin composition comprising 1 to 99 mass % of a 1-butene base polymer satisfying the following items (1') to (4'):

(1') a crystalline resin in which a melting point (Tm-P) defined as a peak top of a peak observed at a highest temperature side in a melting endothermic curve obtained by melting a sample at 190°C for 5 minutes under nitrogen atmosphere by means of a differential scanning calorimeter (DSC), then lowering the temperature down to -10°C at 5°C/minute, holding the sample at -10°C for 5 minutes and then elevating the temperature at 10°C/minute is not observed or 0 to 100°C;
(2') a stereospecific index {(mmmm)/(mmrr + rmmr)} is 20 or less;
(3') a molecular weight distribution (Mw/Mn) measured by a gel permeation chromatography (GPC) method is 4.0 or less; and
(4') a weight average molecular weight (Mw) measured by the GPC method is 10,000 to 1,000,000

and 99 to 1 mass % of an olefin base polymer.

[3] Awrap film formed from a resin composition comprising 1 to 99 mass % of a 1-butene base polymer satisfying the following items (5) and (6):

(5) a 1-butene homopolymer or a copolymer of 1-butene and ethylene and/or α-olefin having 3 to 20 carbon atoms (excluding 1-butene), wherein a structural unit originating in 1-butene accounts for 90 mole % or more and
(6) a II type crystal ratio (CII) obtained by melting a sample at 190°C for 5 minutes, rapidly cooling it with ice and water and solidifying, leaving standing at a room temperature for one hour and then analyzing by X ray diffraction is 50 % or less and 99 to 1 mass % of an olefin base polymer.

[4] The wrap film as described in any of the above items [1] to [3], wherein the 1-butene base polymer is polymerized using a metallocene catalyst comprising a transition metal compound in which a cross-linking structure is formed via two cross-linking groups and a promoter.

[5] The wrap film as described in any of the above itéms [1] to [4], wherein the olefin base polymer is a propylene base polymer.

[6] A multilayer wrap film having at least one layer comprising the resin composition as described in any of the above items [1] to [5].

[7] A multilayer wrap film having at least one layer comprising the 1-butene polymer as described in any of the above items [1] to [3].

[8] A wrap film comprising the multilayer wrap film as described in the above item [7].

Further, the present invention provides the following shrink film.

[1] A shrink film formed from a resin composition comprising 1 to 99 mass % of a 1-butene base polymer satisfying the following items (1) to (4):

(1) a crystalline resin in which a melting point (Tm-D) defined as a peak top of a peak observed at a highest temperature side in a melting endothermic curve obtained by holding a sample at -10°C for 5 minutes under nitrogen atmosphere by means of a differential scanning calorimeter (DSC) and then elevating the temperature at 10°C/minute is 0 to 100°C;
(2) a stereospecific index {(mmmm)/(mmrr + rmmr)} is 20 or less;
(3) a molecular weight distribution (Mw/Mn) measured by a gel permeation chromatography (GPC) method is 4.0 or less; and
(4) a weight average molecular weight (Mw) measured by the GPC method is 10,000 to 1,000,000

and 99 to 1 mass % of an olefin base polymer.
[2] A shrink film formed from a resin composition comprising 1 to 99 mass % of a 1-butene base polymer satisfying the following items (1') to (4'):

(1') a crystalline resin in which a melting point (Tm-P) defined as a peak top of a peak observed at a highest temperature side in a melting endothermic curve obtained by melting a sample at 190°C for 5 minutes under nitrogen atmosphere by means of a differential scanning calorimeter (DSC), then lowering the temperature down to -10°C at 5°C/minute, holding the sample at -10°C for 5 minutes and then elevating the temperature at 10°C/minute is not observed or 0 to 100°C;
(2') a stereospecific index {(mmmm)/(mmrr + rmmr)} is 20 or less;
(3') a molecular weight distribution (Mw/Mn) measured by a gel permeation chromatography (GPC) method is 4.0 or less; and
(4') a weight average molecular weight (Mw) measured by the GPC method is 10,000 to 1,000,000

and 99 to 1 mass % of an olefin base polymer.
[3] A shrink film formed from a resin composition comprising 1 to 99 mass % of a 1-butene base polymer satisfying the following items (5) and (6):

(5) a 1-butene homopolymer or a copolymer of 1-butene and ethylene and/or α-olefin having 3 to 20 carbon atoms (excluding 1-butene), wherein a structural unit originating in 1-butene accounts for 90 mole % or more and
(6) a II type crystal ratio (CII) obtained by melting a sample at 190°C for 5 minutes, rapidly cooling it with ice and water and solidifying, leaving standing at a room temperature for one hour and then analyzing by X ray diffraction is 50 % or less

and 99 to 1 mass % of an olefin base polymer.
[4] The shrink film as described in any of the above items [1] to [3], wherein the 1-butene base polymer is polymerized using a metallocene catalyst comprising a transition metal compound in which a cross-linking structure is formed via two cross-linking groups and a promoter.
[5] The shrink film as described in any of the above items [1] to [4], wherein the olefin base polymer is a propylene base polymer.
[6] A multilayer shrink film having at least one layer comprising the resin composition as described in any of the above items [1] to [5].

BEST MODE FOR CARRYING OUT THE INVENTION

The 1-butene base polymer [1] used in the wrap film or the shrink film of the present invention, the production process [2] for the same, the wrap film [3] and the shrink film [4] shall be explained below in details.

[1] 1-Butene base polymer

The 1-butene base polymer used in the present invention is a polymer having the following items (1) to (4),

(1') to (4') or (5) and (6) as requisites [hereinafter they shall be referred to as the 1-butene base polymer (I), the 1-butene base polymer (II) and the 1-butene base polymer (III)]:

(1) a crystalline resin in which a melting point (Tm-D) defined as a peak top of a peak observed at a highest temperature side in a melting endothermic curve obtained by holding a sample at -10°C for 5 minutes under nitrogen atmosphere by means of a differential scanning calorimeter (DSC) and then elevating the temperature at 10°C/minute is 0 to 100°C;
(2) a stereospecific index {(mmmm)/(mmrr + rmmr)} is 20 or less;
(3) a molecular weight distribution (Mw/Mn) measured by a gel permeation chromatography (GPC) method is 4.0 or less;
(4) a weight average molecular weight (Mw) measured by the GPC method is 10,000 to 1,000,000;

(1') a crystalline resin in which a melting point (Tm-P) defined as a peak top of a peak observed at a highest temperature side in a melting endothermic curve obtained by melting a sample at 190°C for 5 minutes under nitrogen atmosphere by means of the differential scanning calorimeter (DSC), then lowering the temperature down to -10°C at 5°C/minute, holding the sample at -10°C for 5 minutes and then elevating the temperature at 10°C/minute is not observed or 0 to 100°C;
(2') a stereospecific index {(mmmm)/(mmrr + rmmr)} is 20 or less;
(3') a molecular weight distribution (Mw/Mn) measured by the gel permeation chromatography (GPC) method is 4.0 or less;
(4') a weight average molecular weight (Mw) measured by the GPC method is 10,000 to 1,000,000;

(5) a 1-butene homopolymer or a copolymer of 1-butene and ethylene and/or α-olefin having 3 to 20 carbon atoms (excluding 1-butene), wherein a structural unit originating in 1-butene accounts for 90 mole % or more; and
(6) a II type crystal ratio (CII) obtained by melting a sample at 190°C for 5 minutes, rapidly cooling it with ice and water and solidifying, leaving standing at a room temperature for one hour and then analyzing by X ray diffraction is 50 % or less.

In the present invention, "the melting point (Tm-D) is not observed by means of the differential scanning calorimeter (DSC)" means that a crystallizing speed in DSC measurement is very slow, so that a crystal melting peak can not substantially be observed. In the present invention, the crystalline resin means a resin in which at least either peak of Tm-P and Tm-D is observed.

The 1-butene base polymer (I) or (II) used in the present invention is provided with an excellent balance between an amount of a sticky component, a low elastic modulus and a transparency in the resulting wrap film or shrink film by satisfying the relation of the items (1) to (4) or (1') to (4') described above. That is, it has the advantage that it is low in an elastic modulus, excellent in a soft property (referred to as a flexibility), low in a sticky component, excellent in surface characteristics (for example, represented by less bleeding and less transferring of the sticky component onto the other products) and excellent as well in a transparency. Further, the 1-butene base polymer [III] according to the present invention has the advantage that it does not have a change in physical properties with the passage of time caused by crystal modification and does not cause a shrinkage in the wrap film or the shrink film by satisfying the items (5) and (6) described above.

In the present invention, the mesopentad fraction (mmmm) and the abnormal insertion content (1,4 insertion fraction) were determined according to methods proposed in「Polymer Journal, 16, 717 (1984)」reported by Asakura et al,「Macromol. Chem. Phys., C29, 201 (1989)」reported by J. Randal et al and「Macromol. Chem. Phys., 198, 1257 (1987)」reported by V Busico et al. That is, the signals of a methylene group and a methine group were measured by means of a $^{13}$C nuclear magnetic resonance spectrum to determine a mesopentad fraction (mmmm) and an abnormal insertion content in a poly(1-butene) molecule. The $^{13}$C nuclear magnetic resonance spectrum was measured on the following conditions by means of the following apparatus:

Apparatus: JNM-EX400 type $^{13}$C-NMR apparatus manufactured by Nippon Electron Co., Ltd.
Method: proton complete decoupling method
Concentration: 230 mg/ml
Solvent: a 90 : 10 (volume ratio) mixed solvent of 1,2,4-trichlorobenzene and heavy benzene
Temperature: 130°C
Pulse duration: 45°
Pulse repeating time: 4 seconds
Integration: 10000 times

In the present invention, the stereospecific index {(mmmm)/(mmrr + rmmr)} was calculated from values obtained by measuring (mmmm), (mmrr) and (rmmr) by the method described above. Further, the racemitriad fraction (rr) was calculated by the method described above.

[a] 1-Butene homopolymer

The 1-butene homopolymer (I) or (II) used in the present invention has a stereospecific index {(mmmm)/(mmrr + rmmr)} of 20 or less, preferably 18 or less and more preferably 15 or less. If the stereospecific index exceeds 20, a reduction in the flexibility, the low temperature heat sealing property and the hot tacking property is brought about.
The 1-butene homopolymer (I) or (II) used in the present invention has, in addition to the requisite described above, a molecular weight distribution (Mw/Mn) of 4.0 or less, preferably 3.5 or less and particularly preferably 3.0 or less which is measured by the GPC method. If the molecular weight distribution (Mw/Mn) exceeds 4.0, stickiness is caused in a certain case.
The 1-butene polymer [I] or [II] used in the present invention has, in addition to the requisites described above, a weight average molecular weight (Mw) of 10,000 to 1,000,000, preferably 100,000 to 1,000,000 and more preferably 100,000 to 600,000 which is measured by the GPC method. If Mw is less than 10,000, stickiness is caused in a certain case. On the other hand, if it exceeds 1,000,000, the fluidity is reduced, so that the molding property is inferior in a certain case.
Mw/Mn described above is a value calculated from the weight average molecular weight (Mw) and the number average molecular weight (Mn) in terms of polystyrene, which is measured on the following conditions according to the GPC method by means of the following apparatus.

GPC measuring apparatus

Column: TOSO GMHHR-H(S) HT
Detector: RI detector for liquid chromatogram WATERS 150C

Measuring conditions

Solvent: 1,2-trichlorobenzene
Measuring temperature: 145°C
Flow velocity: 1.0 ml/minute
Sample concentration: 2.2 mg/ml
Injection amount: 160 microliter
Calibration curve: Universal Calibration
Analytical program: HT-GPC (Ver. 1.0)

When Tm-P described above is not observed, the 1-butene polymer (I) used in the present invention has to be a crystalline resin having a melting point (Tm-D) of 0 to 100°C, preferably 0 to 80°C from the viewpoint of the soft property, which is measured by means of a differential scanning calorimeter (DSC). Tm-D is determined by DSC measurement. That is, a peak top of a peak observed at a highest temperature side in a melting endothermic curve obtained by holding 10 mg of a sample at -10°C for 5 minutes under nitrogen atmosphere by means of the differential scanning calorimeter (DSC) and then elevating the temperature at 10°C/minute is the melting point: Tm-D.
In the 1-butene homopolymer (I) used in the present invention having the structures of (1) to (4) described above, if a melting endothermic amount ΔH-D obtained by DSC measurement in addition to the requisites described above is 50 J/g or less, it is excellent in a flexibility and therefore preferred. ΔH-D is an index showing whether or not the polymer is soft, and if this value grows larger, it means that the elastic modulus is high and the soft property is reduced. ΔH-D is determined by a method described later.
The 1-butene homopolymer (II) used in the present invention has to be a crystalline resin in which a melting point (Tm-P) is not observed by means of the differential scanning calorimeter (DSC) or is 0 to 100°C from the viewpoint of the soft property, and if the melting point is observed, it is preferably 0 to 80°C. Tm-P is determined by DSC measurement. That is, a peak top of a peak observed at a highest temperature side in a melting endothermic curve obtained by melting 10 mg of a sample at 190°C for 5 minutes under nitrogen atmosphere by means of the differential scanning calorimeter (DSC), then lowering the temperature down to -10°C at 5°C/minute, holding the sample at -10°C for 5

minutes and then elevating the temperature at 10°C/minute is the melting point: Tm-P.

In the 1-butene homopolymer (II) used in the present invention having the structures of (1') to (4') described above, if a melting endothermic amount ΔH-D obtained by DSC measurement in addition to the requisites described above is 50 J/g or less, it is excellent in a flexibility and therefore preferred, and if the amount is 10 J/g or less, it is more preferred. ΔH-D is an index showing whether or not the polymer is soft, and if this value grows larger, it means that the elastic modulus is high and the soft property is reduced. ΔH-D is determined by the following method. That is, a melting endothermic amount obtained by melting 10 mg of a sample at 190°C for 5 minutes under nitrogen atmosphere by means of the differential scanning calorimeter (DSC), then lowering the temperature down to -10°C at 5°C/minute, holding the sample at -10°C for 5 minutes and then elevating the temperature at 10°C/minute is ΔH-P.

The 1-butene homopolymer (I) or (II) used in the present invention has a mesopentad fraction (mmmm) of preferably 20 to 90 %, more preferably 30 to 85 % and most preferably 30 to 80 %. If the mesopentad fraction is less than 20 %, stickiness on the surface of the molded article and a reduction in the transparency are likely to be brought about. On the other and, if it exceeds 90 %, a reduction in the flexibility, the low temperature heat sealing property and the hot tacking property is brought about in a certain case.

The 1-butene homopolymer (I) or (II) used in the present invention satisfies preferably the relation of (mmmm) $\leqq$90-2 × (rr), more preferably the relation of (mmmm)$\leqq$87-2 × (rr). If this relation is not satisfied, stickiness on the surface of the molded article and a reduction in the transparency are likely to be brought about.

Further, the 1-butene homopolymer (I) or (II) used in the present invention has preferably a 1,4 insertion fraction of 5 % or less. If it exceeds 5 %, a composition distribution of the polymer is expanded, and therefore an adverse effect is likely to be exerted on the physical properties.

In the 1-butene base homopolymer (III) used in the present invention, a II type crystal ratio (CII) obtained by melting it at 190°C for 5 minutes, rapidly cooling with ice and water and solidifying, leaving standing at a room temperature for one hour and then analyzing by X ray diffraction has to be 50 % or less, preferably 20 % or less and more preferably 0 %.

In the present invention, the II type crystal ratio (CII) was determined according to a method proposed in 「Polymer, 7, 23 (1966)」 proposed by A. Turner Jones et al. That is, a peak in a I type crystal state and a peak in a II type crystal state were measured by X ray diffraction analysis to determine a II type crystal ratio (CII) in the crystal of the 1-butene base homopolymer. X ray diffraction analysis (WAXD) was carried out on the following conditions by means of anticathode type Rotorflex RU-200 manufactured by Rigaku Denki Co., Ltd.

Sample state: molten at 190°C for 5 minutes, rapidly cooled with ice and water and solidified and then left standing at a room temperature for one hour
Output: 30 kV, 200 mA
Detector: PSPC (position sensitive proportional counter)
Integrating time: 200 seconds

The 1-butene homopolymer (III) used in the present invention has a weight average molecular weight (Mw) of preferably 10,000 to 1,000,000 which is measured by the GPC method, as the other requisite (7) in addition to the requisites described above. It is more preferably 100,000 to 1,000,000 and further preferably 100,000 to 600,000. If Mw is less than 10,000, stickiness is caused in a certain case. On the other hand, if it exceeds 1,000,000, the fluidity is reduced, so that the molding property is inferior in a certain case. Mw/Mn and Mw described above are measured by the same measuring methods as described above.

The 1-butene homopolymer (I), (II) or (III) used in the present invention has a tensile elastic modulus of preferably 500 MPa or less, more preferably 300 MPa or less which is measured by a tensile test according to JIS K-7113. If it exceeds 500 MPa, the satisfactory soft property is not obtained in a certain case.

[a'] 1-Butene base copolymer

The 1-butene base copolymer used in the present invention is a copolymer of 1-butene and ethylene and/or α-olefin having 3 to 20 carbon atoms (excluding 1-butene) having the above items (1) to (4), (1') to (4') or (5) and (6) as the requisites [hereinafter they shall be referred to as the 1-butene base copolymer (I), the 1-butene base copolymer (II) and the 1-butene base copolymer (III)], and it is preferably a copolymer of 1-butene and α-olefin having 3 to 20 carbon atoms.

The 1-butene base copolymer (I) or (II) used in the present invention is preferably a random copolymer. A structural unit obtained from 1-butene accounts for preferably 90 mole % or more, more preferably 95 mole % or more. If the structural unit originating in 1-butene accounts for less than 90 mole %, stickiness on the surface of the molded article and a reduction in the transparency are likely to be brought about.

The stereospecific index {(mmmm)/(mmrr + rmmr)} obtained from a (mmmm) fraction and a (mmrr + rmmr)

fraction of a 1-butene chain part has to be 20 or less, preferably 18 or less and more preferably 15 or less. If the stereospecific index exceeds 20, a reduction in the flexibility, the low temperature heat sealing property and the hot tacking property is brought about.

The 1-butene base copolymer (I) or (II) used in the present invention has a molecular weight distribution (Mw/Mn) of 4.0 or less, preferably 3.5 or less and particularly preferably 3.0 or less which is measured by the gel permeation chromatography (GPC) method. If the molecular weight distribution (Mw/Mn) exceeds 4.0, stickiness is caused in a certain case.

The 1-butene base copolymer (I) or (II) used in the present invention has a weight average molecular weight Mw of 10,000 to 1,000,000, preferably 100,000 to 1,000,000 and more preferably 100,000 to 600,000 which is measured by the gel permeation chromatography (GPC) method. If the weight average molecular weight is less than 10,000, stickiness is caused, and if it exceeds 1,000,000, the fluidity is reduced, so that the molding property is inferior in a certain case. Mw/Mn and Mw described above are measured by the same measuring methods as described above.

In the 1-butene base copolymer (II) used in the present invention, a melting point (Tm-P) does not have to be observed by means of the differential scanning calorimeter (DSC) or has to be 0 to 100°C from the viewpoint of the soft property, and when the melting point is observed, it is preferably 0 to 80°C. When the melting point is not observed, the 1-butene base copolymer (II) has to have a melting point (Tm-D) of 0 to 100°C, preferably 0 to 80°C. Tm-P and Tm-D are determined by the DSC measurement described above.

When the 1-butene base copolymer (I) or (II) described above was an ethylene-butene copolymer, the butene content and the stereospecific index were measured in the following manners.

The $^{13}C$ nuclear magnetic resonance spectrum was measured on the following conditions by means of a JNM-EX400 type $^{13}C$-NMR apparatus manufactured by Nippon Electron Co., Ltd. to calculate the butene content by the following method:

Sample concentration: 220 mg/NMR solution 3 ml
NMR solution: 1,2,4-trichlorobenzene/benzene-d6 (90/10 vol %)
Measuring temperature: 130°C
Pulse duration: 45°
Pulse repeating time: 10 seconds
Integration frequency: 4000 times

A signal of S α α carbon in the $^{13}C$ nuclear magnetic resonance spectrum was measured on the conditions described above according to a method proposed in 「Macromolecules, (1982), 15, 353 to 336」 by E. T. Hsieh and J. C. Bandall to determine EB and BB dyad chains factions in the polymer chain. The butene content was determined from the respective dyad chain fractions (mole %) thus obtained according to the following equation:

$$\text{butene content (mol \%)} = [BB] + [EB]/2$$

([BB] represents a butene chain fraction, and [EB] represents a ethylene-butene chain fraction).

The stereospecific index was measured by the method described above. Particularly in the ethylene butene copolymer, a peak of side chain methylene carbon originating in a BEE chain was overlapped on a peak of rmmr + mmrr, and therefore a peak intensity of rmmr + mmrr was corrected by deducting a component value of a peak in T α δ carbon of 37.5 to 37.2 from an overlapped intensity of the peak of rmmr + mmrr and the peak of side chain methylene carbon originating in the BEE chain.

When the 1-butene base copolymer (I) or (II) described above was a propylene·butene copolymer, the butene content was measured in the following manners.

The $^{13}C$ nuclear magnetic resonance spectrum was measured on the following conditions by means of the JNM-EX400 type $^{13}C$-NMR apparatus manufactured by Nippon Electron Co., Ltd. to calculate the butene content by the following method:

Sample concentration: 220 mg/NMR solution 3 ml
NMR solution: 1,2,4-trichlorobenzene/benzene-d6 (90/10 vol %)
Measuring temperature: 130°C
Pulse duration: 45°
Pulse repeating time: 10 seconds
Integration frequency: 4000 times

A signal of S α α carbon in the $^{13}C$ nuclear magnetic resonance spectrum was measured on the conditions

described above according to a method proposed in「Macromolecules, 1978, 11, 592」by J. C. Bandall et al to determine PB and BB dyad chains. The butene content was determined from the respective dyad chain fractions (mole %) thus obtained according to the following equation:

$$\text{butene content (mol \%)} = [BB] + [PB]/2$$

([BB] represents a butene chain fraction, and [PB] represents a propylene-butene chain fraction).

When the 1-butene base copolymer (I) or (II) described above was an octene-butene copolymer, the butene content was measured in the following manner.

The $^{13}$C nuclear magnetic resonance spectrum was measured on the following conditions by means of the JNM-EX400 type $^{13}$C-NMR apparatus manufactured by Nippon Electron Co., Ltd. to calculate the butene content by the following method:

Sample concentration: 220 mg/NMR solution 3 ml
NMR solution: 1,2,4-trichlorobenzene/benzene-d6 (90/10 vol %)
Measuring temperature: 130°C
Pulse duration: 45°
Pulse repeating time: 10 seconds
Integration frequency: 4000 times

A signal of S α α carbon in the $^{13}$C nuclear magnetic resonance spectrum was measured on the conditions described above to determine OB and BB dyad chain fractions from the BB chain observed in 40.8 to 40.0 ppm and an intensity of a peak originating in the OB chain observed in 41.3 to 40.8 ppm. The butene content was determined from the respective dyad chain fractions (mole %) thus obtained according to the following equation:

$$\text{butene content (mol \%)} = [BB] + [OB]/2$$

([BB] represents a butene chain fraction, and [OB] represents an octene-butene chain fraction).

In the 1-butene base copolymer (III) used in the present invention, a structural unit originating in 1-butene has to account for 90 mole % or more, preferably 95 mole % or more [the 1-butene base polymer (III) is preferably a homopolymer].

In the 1-butene base copolymer (III) used in the present invention, a II type crystal ratio (CII) obtained by melting it at 190°C for 5 minutes, rapidly cooling with ice and water and solidifying, leaving standing at a room temperature for one hour and then analyzing by X ray diffraction has to be 50 % or less, preferably 20 % or less and more preferably 0 %. The II type crystal ratio (CII) is measured by the same method as described above.

The 1-butene base copolymer (III) used in the present invention has a weight average molecular weight (Mw) of preferably 10,000 to 1,000,000 which is measured by the GPC method, as a requisite (7) in addition to the requisites described above. This weight average molecular weight is more preferably 100,000 to 1,000,000 and further preferably 100,000 to 600,000. If Mw is less than 10,000, stickiness is caused in a certain case. On the other hand, if it exceeds 1,000,000, the fluidity is reduced, so that the molding property is inferior in a certain case. Mw/Mn and Mw described above are measured by the same methods as described above.

In respect to the 1-butene base copolymer used in the present invention, the α-olefin having 3 to 20 carbon atoms includes propylene, 1-pentene, 4-methyl-1-pentene, 1-hexene, 1-octene, 1-decene, 1-dodecene, 1-tetradecene, 1-hexadecene, 1-octadecene and 1-eicosene, and at least one of them can be used in the present invention.

Further, the 1-butene base copolymer used in the present invention has a tensile elastic modulus of preferably 500 MPa or less, more preferably 300 MPa or less which is measured by the tensile test according to JIS K-7113. If it exceeds 500 MPa, the satisfactory soft property is not obtained in a certain case.

[2] Production processes for 1-butene homopolymer (a) and 1-butene base copolymer (a')

Production processes for the 1-butene homopolymer (a) and the 1-butene base copolymer (a') used in the present invention include a process in which a catalyst system called a metallocene catalyst is used to homopolymerize 1-butene and a process in which 1-butene is copolymerized with ethylene and/or α-olefin having 3 to 20 carbon atoms (excluding 1-butene) in the presence of the above catalyst. The metallocene catalyst includes transition metal compounds having one or two of a cyclopentadienyl group, a substituted cyclopentadienyl group, an indenyl group and a substituted indenyl group as ligands and catalysts obtained by combining transition metal compounds in which the

above ligands are geometrically controlled with promoters, which are described in Japanese Patent Application Laid-Open No. 19309/1983, Japanese Patent Application Laid-Open No. 130314/1986, Japanese Patent Application Laid-Open No. 163088/1991, Japanese Patent Application Laid-Open No. 300887/1992, Japanese Patent Application Laid-Open No. 211694/1992 and Japanese Patent Application Laid-Open (through PCT) No. 502036/1989.

In the present invention, among the metallocene catalysts, preferred are catalysts comprising transition metal compounds in which ligands form a cross-linking structure via cross-linking groups, and among them, preferred is a process in which a metallocene catalyst obtained by combining a transition metal compound forming a cross-linking structure via two ligands with a promoter is used to homopolymerize 1-butene or a process in which 1-butene is copolymerized with ethylene and/or $\alpha$-olefin having 3 to 20 carbon atoms (excluding 1-butene) in the presence of the above catalyst. To show the specific example thereof, given is a process in which 1-butene is homopolymerized in the presence of a catalyst for polymerization comprising a component selected from:

(A) a transition metal compound represented by Formula (I):

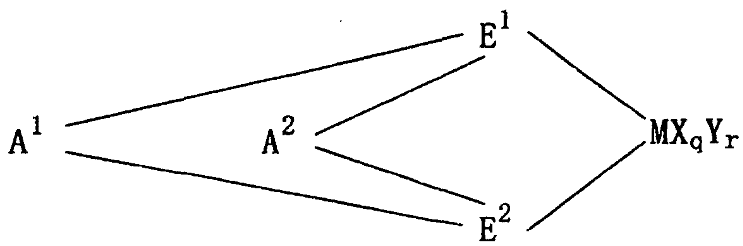

(I)

[wherein M represents a metal element of the 3rd to 10th groups or a lanthanoid series in the periodic table; $E^1$ and $E^2$ each are ligands selected from a substituted cyclopentadienyl group, an indenyl group, a substituted indenyl group, a heterocyclopentadienyl group, a substituted heterocyclopentadienyl group, an amide group, a phosphide group, a hydrocarbon group and a silicon-containing group and form a cross-linking group via $A^1$ and $A^2$, and they may be the same as or different from each other; X represents a $\sigma$-bonding ligand, and when plural X's are present, plural X's may be the same or different and may cross-link with other X, $E^1$, $E^2$ or Y; Y represents a Lewis base, and when plural Y's are present, plural Y's may be the same or different and may cross-link with other Y, $E^1$, $E^2$ or X; $A^1$ and $A^2$ are divalent cross-linking groups combining two ligands and represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^{1-}$, $-PR^{1-}$, $-P(O)R^{1-}$, $-BR^{1-}$ or $-AlR^{1-;}$ $R^1$ represents a hydrogen atom, a halogen atom, a hydrocarbon group having 1 to 20 carbon atoms or a halogen-containing hydrocarbon group having 1 to 20 carbon atoms, and they may be the same as or different from each other; q is an integer of 1 to 5 and represents [(a valence of M) -2]; and r represents an integer of 0 to 3] and

(B) (B-1) a compound which can be reacted with the transition metal compound of the above component (A) or a derivative thereof to form an ionic complex and (B-2) aluminoxane,

or a process in which 1-butene is copolymerized with ethylene and/or $\alpha$-olefin having 3 to 20 carbon atoms (excluding 1-butene) in the presence of the above catalyst.

In Formula (I) described above, M represents a metal element of the 3rd to 10th groups or a lanthanoid series in the periodic table, and the specific examples thereof include titanium, zirconium, hafnium, yttrium, vanadium, chromium, manganese, nickel, cobalt, palladium and lanthanoid series metals, and among them, titanium, zirconium and hafnium are suited in terms of the olefin polymerization activity. $E^1$ and $E^2$ each represent ligands selected from a substituted cyclopentadienyl group, an indenyl group, a substituted indenyl group, a heterocyclopentadienyl group, a substituted heterocyclopentadienyl group, an amide group (-N<), a phosphine group (-P<), a hydrocarbon group (>CR-, >C<) and a silicon-containing group (>SiR-, >Si<) (provided that R is hydrogen, a hydrocarbon group having 1 to 20 carbon atoms or a hetero atom-containing group), and they form a cross-linking structure via $A^1$ and $A^2$. $E^1$ and $E^2$ may be the same as or different from each other. These $E^1$ and $E^2$ are preferably a substituted cyclopentadienyl group; an indenyl group or a substituted indenyl group.

X represents a $\sigma$-bonding ligand, and when plural X's are present, plural X's may be the same or different and may cross-link with other X, $E^1$, $E^2$ or Y. The specific examples of above X include a halogen atom, a hydrocarbon group having 1 to 20 carbon atoms, an alkoxy group having 1 to 20 carbon atoms, an aryloxy group having 6 to 20 carbon atoms, an amide group having 1 to 20 carbon atoms, a silicon-containing group having 1 to 20 carbon atoms, a phosphide group having 1 to 20 carbon atoms, a sulfide group having 1 to 20 carbon atoms and an acyl group having

1 to 20 carbon atoms. On the other hand, Y represents a Lewis base, and when plural Y's are present, plural Ys may be the same or different and may cross-link with other Y, $E^1$, $E^2$ or X. The specific examples of the Lewis base of above Y include amines, ethers, phosphines and thioethers.

Next, $A^1$ and $A^2$ are divalent cross-linking groups combining two ligands and represent a hydrocarbon group having 1 to 20 carbon atoms, a halogen-containing hydrocarbon group having 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$ or $-AlR^1-$, in which $R^1$ represents a hydrogen atom, a halogen atom, a hydrocarbon group having 1 to 20 carbon atoms or a halogen-containing hydrocarbon group having 1 to 20 carbon atoms, and they may be the same as or different from each other. Such cross-linking group includes, for example, a group resented by a formula:

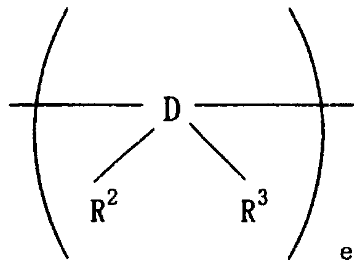

(wherein D represents carbon, silicon or tin; $R^2$ and $R^3$ each are a hydrogen atom or a hydrocarbon group having 1 to 20 carbon atoms, and they may be the same as or different from each other and may be combined with each other to form a ring structure; and e represents an integer of 1 to 4), and capable of being given as the specific examples thereof are methylene, ethylene, ethylidene, propylidene, isopropylidene, cyclohexylidene, 1,2-cyclohexylene, vinylidene ($CH_2=C=$), dimethylsilylene, diphenylsilylene, methylphenylsilylene, dimethylgermylene, dimethylstanylene, tetramethyldisilylene and diphenyldisilylene. Among them, ethylene, isopropylidene and dimethylsilylene are suited. The code q is an integer of 1 to 5 and represents [(a valence of M) - 2], and r represents an integer of 0 to 3.

Among the transition metal compounds represented by Formula (I), preferred is a transition metal compound comprising a double cross-liking type biscyclopentadienyl derivative represented by Formula (II) as a ligand:

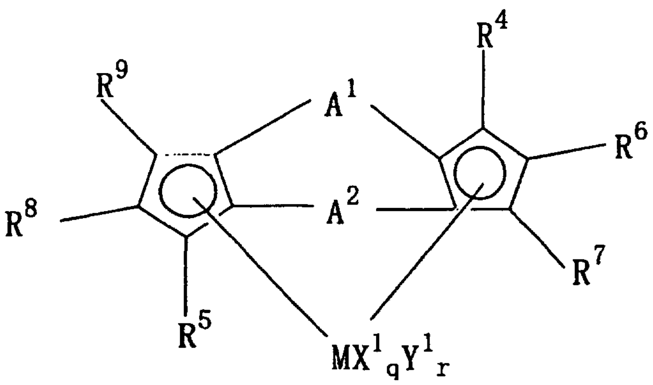

• • • (II)

In Formula (II) described above, M, $A^1$, $A^2$, q and r are the same as described above. $X^1$ represents a σ-bonding ligand, and when plural $X^1$'s are present, plural $X^1$'s may be the same or different and may cross-link with other $X^1$ or $Y^1$. The same ones as given as the examples in the explanation of X in Formula (I) can be given as the specific examples of this $X^1$. $Y^1$ represents a Lewis base, and when plural $Y^1$'s are present, plural $Y^1$'s may be the same or different and may cross-link with other $Y^1$ or $X^1$. The same ones as given as the examples in the explanation ofY in Formula (I) can be given as the specific examples of this $Y^1$. $R^4$ to $R^9$ each represent a hydrogen atom, a halogen atom, a hydrocarbon group having 1 to 20 carbon atoms, a halogen-containing hydrocarbon group having 1 to 20 carbon atoms, a silicon-containing group or a hetero atom-containing group, and at least one of them does not have to be a hydrogen atom. $R^4$ to $R^9$ may be the same as or different from each other, and the adjacent groups themselves may be combined with each other to form a ring. Among them, $R^6$ and $R^7$ preferably form a ring, and $R^8$ and $R^9$ preferably form a ring. A group containing a hetero atom such as oxygen, halogen and silicon is preferred as $R^4$ and $R^5$ since the polymerization activity grows high.

This transition metal compound comprising a double cross-liking type biscyclopentadienyl derivative as a

ligand is preferably a compound containing silicon in a cross-linking group between the ligands.

Capable of being given as the specific examples of the transition metal compound represented by Formula (I) are (1,2'-ethylene)(2,1'-ethylene)-bis(indenyl)zirconium dichloride, (1,2'-methylene)(2, 1'-methylene)-bis(indenyl) zirconium dichloride, (1,2'-isopropylidene)(2,1'-isopropylidene)-bis(indenyl)zirconium dichloride, (1,2'-ethylene)(2,1'-ethylene)-bis(3-methylindenyl)-zirconium dichloride, (1,2'-ethylene)(2,1'-ethylene)-bis(4,5-benzoindenyl)zirconium dichloride, (1,2'-ethylene)(2,1'-ethylene)-bis(4-isopropylindenyl)-zirconium dichloride, (1,2'-ethylene)(2,1'-ethylene)-bis(5,6-dimethylindenyl)zirconium dichloride, (1,2'-ethylene)(2,1'-ethylene)-bis(4,7-diisopropylindenyl)-zirconium dichloride, (1,2'-ethylene)(2,1'-ethylene)-bis(4-phenylindenyl)zirconium dichloride, (1,2'-ethylene)(2,1'-ethylene)-bis (3-methyl-4-isopropylindenyl)zirconium dichloride, (1,2'-ethylene)(2,1'-ethylene)-bis(5,6-benzoindenyl)-zirconium dichloride, (1,2'-ethylene)(2,1'-isopropylidene)-bis(indenyl)zirconium dichloride, (1,2'-methylene)(2,1'-ethylene)-bis (indenyl)zirconium dichloride, (1,2'-methylene)(2,1'-isopropylidene)-bis(indenyl)zirconium dichloride, (1,2'-dimethylsilylene)(2,1'-dimethylsilylene)-bis(indenyl)zirconium dichloride, (1,2'-dimethylsilylene)(2,1'-dimethylsilylene)bis (3-methylindenyl)zirconium dichloride, (1,2'-dimethylsilylene)(2, 1'-dimethylsilylene)bis(3-n-buthylindenyl)zirconium dichloride, (1,2'-dimethylsilylene)(2,1'-dimethylsilylene)bis(3-i-propylindenyl)zirconium dichloride, (1,2'-dimethylsilylene)(2,1'-dimethylsilylene)bis(3-trimethylsilylmethylindenyl)zirconium dichloride, (1,2'-dimethylsilylene) (2,1'-dimethylsilylene)bis(3-phyenylindenyl)zirconium dichloride, (1,2'-dimethylsilylene)(2,1'-dimethylsilylene)bis(4,5-benzoindenyl)zirconium dichloride, (1,2'-dimethylsilylene)-(2,1'dimethylsilylene)bis(4-isopropylindenyl)zirconium dichloride, (1,2'-dimethylsilylene)(2,1'-dimethylsilylene)bis(5,6-dimethylindenyl)zirconium dichloride, (1,2'-dimethylsilylene) (2,1'-dimethylsilylene)bis(4,7-di-i-propylindenyl)zirconium dichloride, (1,2'-dimethylsilylene)(2,1'-dimethylsilylene)bis (4-phenylindenyl)zirconium dichloride, (1,2'-dimethylsilylene)(2,1'-dimethylsilylene)bis(3-methyl-4-i-propylindenyl)zirconium dichloride, (1,2'-dimethylsilylene)(2,1'-dimethylsilylene)bis(5,6-benzoindenyl)zirconium dichloride, (1,2'-dimethylsilylene)(2,1'-isopropylidene)-bis(indenyl)zirconium dichloride, (1,2'-dimethylsilylene)(2,1'-isopropylidene)-bis (3-methylindenyl)zirconium dichloride, (1,2'-dimethylsilylene)(2,1'-isopropylidene)-bis(3-i-propylindenyl)zirconium dichloride, (1,2'-dimethylsilylene)(2,1'-isopropylidene)-bis(3-n-buthylindenyl)zirconium dichloride, (1,2'-dimethylsilylene)(2,1'-isopropylidene)-bis(3-trimethylsilylmethylindenyl)zirconium dichloride, (1,2'-dimethylsilylene)(2,1'-isopropylidene)-bis(3-trimethylsilylindenyl)zirconium dichloride, (1,2'-dimethylsilylene)(2,1'-isopropylidene)-bis(3-phenylindenyl)zirconium dichloride, (1,2'-dimethylsilylene)(2,1'-methylene)-bis(indenyl) zirconium dichloride, (1,2'-dimethylsilylene)(2,1'-methylene)-bis(3-methylindenyl)zirconium dichloride, (1,2'-dimethylsilylene)(2,1'-methylene)-bis(3-i-propylindenyl)zirconium dichloride, (1,2'-dimethylsilylene)(2,1'-methylene)-bis(3-n-buthylindenyl)zirconium dichloride, (1,2'-dimethylsilylene)(2,1'-methylene)-bis(3-trimethylsilylmethylindenyl)zirconium dichloride, (1,2'-dimethylsilylene) (2,1'-methylene)-bis(3-trimethylsilylindenyl)zirconium dichloride, (1,2'-diphenylsilylene)(2,1'-methylene)-bis(indenyl)-zirconium dichloride, (1,2'-diphenylsilylene)(2,1'-methylene)-bis(3-methylindenyl)zirconium dichloride, (1,2'-diphenylsilylene)(2,1'-methylene)-bis(3-i-propylindenyl)zirconium dichloride, (1,2'-diphenylsilylene)(2,1'-methylene)-bis(3-n-buthylindenyl)zirconium dichloride, (1,2'-cliphenylsilylene)(2,1'-methylene)-bis(3-trimethylsilylmethylindenyl)zirconium dichloride, (1,2'-diphenylsilylene)(2,1'-methylene)-bis(3-trimethylsilylindenyl)zirconium dichloride, (1,2'-dimethylsilylene)(2,1'-dimethylsilylene)(3-methylcyclopentadienyl)(3'-methylcyclopentadienyl)-zirconium dichloride, (1,2'-dimethylsilylene)(2,1'-isopropylidene)(3-methylcyclopentadienyl)(3'-methylcyclopentadienyl)zirconium dichloride, (1,2'-dimethylsilylene)(2,1'-ethylene)(3-methylcyclopentadienyl)(3'-methylcyclopentadienyl)zirconium dichloride, (1,2'-ethylene)(2,1'-methylene)(3-methylcyclopentadienyl)-(3'-methylcyclopentadienyl)zirconium dichloride, (1,2'-ethylene)(2,1'-isopropylidene)(3-methylcyclopentadienyl)(3'-methylcyclopentadienyl)-zirconium dichloride, (1,2'-methylene)(2,1'-methylene)(3-methylcyclopentadienyl)(3'-methylcyclopentadienyl)zirconium dichloride, (1,2'-methylene) (2,1'-isopropylidene)(3-methylcyclopentadienyl)(3'-methylcyclopentadienyl)-zirconium dichloride, (1,2'-isopropylidene)(2,1'-isopropylidene)(3-methylcyclopentadienyl)(3'-methylcyclopentadienyl)zirconium dichloride, (1,2'-dimethylsilylene)(2,1'-dimethylsilylene)(3,4-dimethylcyclopentadienyl)(3',4'-dimethylcyclopentadienyl)zirconium dichloride, (1,2'-dimethylsilylene)(2,1'-isopropylidene)(3,4-dimethylcyclopentadienyl)(3',4'-dimethylcyclopentadienyl)zirconium dichloride, (1,2'-dimethylsilylene)(2,1'-ethylene)(3,4-dimethylcyclopentadienyl)(3',4'-dimethylcyclopentadienyl)zirconium dichloride, (1,2'-ethylene)(2,1'-methylene)(3,4-dimethylcyclopentadienyl)(3',4'-dimethylcyclopentadienyl)zirconium dichloride, (1,2'-ethylene)(2,1'-isopropylidene)(3,4-dimethylcyclopentadienyl)(3',4'-dimethylcyclopentadienyl)zirconium dichloride, (1,2'-methylene)(2,1'-methylene)(3,4-dimethylcyclopentadienyl)(3',4'-dimethylcyclopentadienyl)zirconium dichloride, (1,2'-methylene)(2,1'-isopropylidene)(3,4-dimethylcyclopentadienyl)(3',4'-dimethylcyclopentadienyl)zirconium dichloride, (1,2'-isopropylidene)(2,1'-isopropylidene)(3,4-dimethylcyclopentadienyl)(3',4'-dimethylcyclopentadienyl)zirconium dichloride, (1,2'-dimethylsilylene)(2,1'-dimethylsilylene)(3-methyl-5-ethylcyclopentadienyl) (3'-methyl-5'-ethylcyclopentadienyl)zirconium dichloride, (1,2'-dimethylsilylene)(2,1'-dimethylsilylene)(3-methyl-5-ethylcyclopentadienyl)(3'-methyl-5'-ethylcyclopentadienyl)zirconium dichloride, (1,2'-dimethylsilylene)(2,1'-dimethylsilylene)(3-methyl-5-isopropylcyclopentadienyl)(3'-methyl-5'-isopropylcyclopentadienyl)zirconium dichloride, (1,2'-dimethylsilylene)(2,1'-dimethylsilylene)(3-methyl-5-n-buthylcyclopentadienyl)(3'-methyl-5'-n-buthylcyclopentadienyl) zirconium dichloride, (1,2'-dimethylsilylene)(2,1'-dimethylsilylene)(3-methyl-5-phenylcyclopentadienyl)(3'-methyl-5'-phenylcyclopentadienyl)zirconium dichloride, (1,2'-dimethylsilylene)(2,1'-isopropylidene)(3-methyl-5-ethylcyclopentadienyl)(3'-methyl-5'-ethylcyclopentadienyl)zirconium dichloride, (1,2'-dimethylsilylene)(2,1'-isopropylidene)(3-methyl-5-i-propylcyclopentadienyl)(3'-methyl-5'-i-propylcyclopentadienyl)zirconium dichloride, (1,2'-dimethylsilylene)(2,1'-isopropylidene)(3-methyl-5-n-buthylcyclopentadienyl)(3'-methyl-5'-n-buthylcyclopentadienyl)zirconium dichloride, (1,2'-dimethylsilylene)(2,1'-isopropylidene)(3-methyl-5-phenylcyclopentadienyl)(3'-methyl-5'-phenylcyclopentadienyl) zirconium dichloride, (1,2'-dimethylsilylene)(2,1'-ethylene)(3-methyl-5-ethylcyclopentadienyl)(3'-methyl-5'-ethylcyclopentadienyl)zirconium dichloride, (1,2'-dimethylsilylene)(2,1'-ethylene)(3-methyl-5-i-propylcyclopentadienyl)(3'-methyl-5'-i-propylcyclopentadienyl)zirconium dichloride, (1,2'-dimethylsilylene)(2,1'-ethylene)(3-methyl-5-n-buthylcyclopentadienyl)(3'-methyl-5'-n-buthylcyclopentadienyl)zirconium dichloride, (1,2'-dimethylsilylene)(2,1'-ethylene)(3-methyl-5-phenylcyclopentadienyl)(3'-methyl-5'-phenylcyclopentadienyhl)zirconium dichloride, (1,2'-dimethylsilylene)(2,1'-methylene)(3-methyl-5-ethylcyclopentadienyl)(3'-methyl-5'-ethylcyclopentadienyl)zirconium dichloride, (1,2-dimethylsilylene)(2,1'-methylene)(3-methyl-5-i-propylcyclopentadienyl)(3'-methyl-5'-i-propycyclopentadienyl)zirconium dichloride, (1,2'-dimethylsilylene)(2,1'-methylene)(3-methyl-5-n-buthylcyclopentadienyl)(3'-methyl-5'-n-buthylcylopentadienyl)zirconium dichloride, (1,2'-dimethylsilylene)(2,1'-methylene)(3-methyl-5-phenylcyclopentadienyl)(3'-methyl-5'-phenylcyclopentadienyl)zirconium dichloride, (1,2'-ethylene)(2,1'-methylene)(3-methyl-5-i-propylcyclopentadienyl)(3'-methyl-5'-i-propylcyclopentadienyl)zirconium dichloride, (1,2'-ethylene)(2,1'-isopropylidene)(3-methyl-5-i-propylcyclopentadienyl)(3'-methyl-5'-i-propylcyclopentadienyl)zirconium dichloride, (1,2'-methylene)(2,1'-methylene)(3-methyl-5-i-propylcyclopentadienyl}(3'-methyl-5'-i-propylcyclopentadienyl)zirconium dichloride, (1,2'-methylene)(2,1'-isopropylidene)(3-methyl-5-i-propylcyclopentadienyl)(3'-methyl-5'-i-propylcyclopentadienyl)zirconium dichloride, (1,1'-dimethylsilylene)(2,2'-climethylsilylene)bisindenyl-zirconium dichloride, (1,1'-diphenylsilylene)(2,2'-dimethylsilylene)bisindenylzirconium dichloride, (1,1'-dimethylsilylene)(2,2'-dimethylsilylene)-bisindenylzirconium dichloride, (1,1'-diisopropylsilylene)(2,2'-dimethylsilylene)-bisindenylzirconium dichloride, (1,1'-dimethylsilylene)(2,2'-diisopropylsilylene)-bisindenylzirconium dichloride, (1,1'-dimethylsilyleneindenyl)(2,2'-dimethylsilylene-3-trimethylsilylindenyl) zirconium dichloride, (1,1'-diphenylsilyleneindenyl)(2,2'-diphenylsilylene-3-trimethylsilylindenyl)zirconium dichloride, (1,1'-diphenylsilyleneindenyl)(2,2'-dimethylsilylene-3-trimethylsilylindenyl)zirconium dichloride, (1,1'-dimethylsilyleneindenyl)(2,2'-diphenylsilylene- 3-trimethylsilylindenyl)zirconium dichloride, (1,1'-diisopropylsilyleneindenyl)(2,2'-dimethylsilylene-3-trimethylsilylindenyl)zirconium dichloride, (1,1'-dimethylsilyleneindenyl)(2,2'-diisopropylsilylene-3-trimethylsilylindenyl)zirconium dichloride, (1,1'-diisopropylsilyleneindenyl)(2,2'-diisopropylsilylene-3-trimethylsilylindenyl)zirconium dichloride, (1,1'-dimethylsilyleneindenyl)(2-2'-dimethylsilylene-3-trimethylsilylmethylindenyl)zirconium dichloride, (1,1'-diphenylsilyleneindenyl)(2,2'-diphenylsilylene-3-trimethylsilylmethyhndenyl)zirconium dichloride, (1,1'-diphenylsilyleneindenyl)(2,2'-dimethylsilylene-3-trimethysilylmethylindenyl)zirconium dichloride, (1,1'-dimethylsilyleneindenyl)(2,2'-diphenylsilylene-3-trimetylsilylmethylindenyl)zirconium dichloride, (1,1'-diisopropylsilyleneindenyl)(2,2'-dimethylsilylene-3-trimethylsilylmethylindenyl)-zirconium dichloride, (1,1'-dimethylsilyleneindenyl)-(2,2'-diisopropylsilylene-3-trimethylmethylsilylindenyl)zirconium dichloride, (1,1'-diisopropylsilyleneindenyl)(2,2'-diisopropylsilylene-3-trimethymethylsilylindenyl)zirconium dichloride, and compounds obtained by substituting zirconium in these compounds with titanium or hafnium. It is a matter of course that they shall not be restricted to these compounds. Further, they may be analogous compounds of the other groups or metal elements of a lanthanoid series. In the compounds described above, (1,1'-)(2,2'-) may be (1,2'-)(2,1'-), and (1,2'-),(2,1'-) may be (1,1'-)(2,2'-).

Next, any compounds can be used as the (B-1) component in the component (B) as long as they can be reacted with the transition metal compound of the component (A) described above to form an ionic complex, and compounds represented by the following Formulas (III) and (IV) can suitably be used:

$$([L^1\text{-}R^{10}]^{k+})_a([Z]^-)_b \qquad \text{(III)}$$

$$([L^2]^{k+})_a([Z]^-)_b \qquad \text{(IV)}$$

(provided that $L^2$ is $M^2$, $R^{11}R^{12}M^3$, $R^{13}{}_3C$ or $R^{14}M^3$)

[in Formulas (III) and (IV), $L^1$ represents a Lewis base; $[Z]^-$ represents non-coordinate anions $[Z^1]^-$ and $[Z^2]^-$, wherein $[Z^1]^-$ represents an anion in which plural groups are combined with an element, that is, $[M^1G^1G^2\cdots G^f]^-$ (in which $M^1$ represents a 5th to 15th group element in the periodic table, preferably a 13th to 15th group element in the periodic table; $G^1$ to $G^f$ each represent a hydrogen atom, a halogen atom, an alkyl group having 1 to 20 carbon atoms, a dialkylamino group having 2 to 40 carbon atoms, an alkoxy group having 1 to 20 carbon atoms, an aryl group having 6 to 20 carbon atoms, an aryloxy group having 6 to 20 carbon atoms, an alkylaryl group having 7 to 40 carbon atoms, a halogen-substituted hydrocarbon group having 1 to 20 carbon atoms, an acyloxy group having 1 to 20 carbon atoms, an organic metalloid group or a hetero atom-containing group having 2 to 20 carbon atoms; two or more of $G^1$ to $G^f$ may form a ring; and f represents an integer of [(a valence of central metal $M^1$) + 1]); $[Z^2]^-$ represents a Brensted acid

alone in which a logarithm (pKa) of an inverse number of an acid dissociation constant is -10 or less, a conjugate base comprising a combination of a Brensted acid and a Lewis acid or a conjugate base of an acid usually defined as a superstrong acid; and a Lewis base may be coordinated therewith; $R^{10}$ represents a hydrogen atom, an alkyl group having 1 to 20 carbon atoms, an aryl group having 6 to 20 carbon atoms, an alkylaryl group or an arylalkyl group; $R^{11}$ and $R^{12}$ each represent a cyclopentadienyl group, a substituted cyclopentadienyl group, an indenyl group or a fluorenyl group; $R^{13}$ represents an alkyl group having 1 to 20 carbon atoms, an aryl group, an alkylaryl group or an arylalkyl group; $R^{14}$ represents a macrocyclic ligand such as tertaphenylporphyrin and phthalocyanine; k is an ionic valence of $[L^1\text{-}R^{10}]$ and $[L^2]$ represents an integer of 1 to 3; a represents an integer of 1 or more; b is $k \times a$; $M^2$ contains a 1st to 3rd, 11th to 13th and 17th group element in the periodic table; and $M^3$ represents a 7th to 12th group element in the periodic table].

Capable of being given as the specific examples of $L^1$ are ammonia, amines such as methylamine, aniline, dimethylamine, diethylamine, N-methylaniline, diphenylamine, N,N-dimethylaniline, trimethylamine, triethylamine, tri-n-butylamine, methyldiphenylamine, pyridine, p-bromo-N,N-dimethylaniline and p-nitro-N,N-dimethylaniline, phosphines such as triethylphosphine, triphenylphosphine and diphenylphosphine, thioethers such as tetrahydrothiophene, esters such as ethyl benzoate and nitriles such as acetonitrile and benzonitrile.

Capable of being given as the specific examples of $R^{10}$ are hydrogen, methyl, ethyl, benzyl and trityl, and capable of being given as the specific examples of $R^{11}$ and $R^{12}$ are cyclopentadienyl, methylcyclopentadienyl, ethylcyclopentadienyl and pentamethylcyclopentadienyl. Phenyl, p-tolyl and p-methoxyphenyl can be given as the specific examples of $R^{13}$, and tetraphenylporphyrin, phthalocyanine, allyl and methallyl can be given as the specific examples of $R^{14}$. Further, Li, Na, K, Ag, Cu, Br, I and $I_3$ can be given as the specific examples of $M^2$. Mn, Fe, Co, Ni and Zn can be given as the specific examples of $M^3$.

In $[Z^1]^-$, that is, $[M^1G^1G^2\cdots G^f]$, the specific examples of $M^1$ include B, Al, Si, P, As and Sb, preferably B and Al. Further, the specific examples of $G^1$, $G^2$ to $G^f$ include a dialkylamino group such as dimethylamino and diethylamino, an alkoxy group or an aryloxy group such as methoxy, ethoxy, n-butoxy and phenoxy, a hydrocarbon group such as methyl, ethyl, n-propyl, isopropyl, n-butyl, isobutyl, n-octyl, n-eicosyl, phenyl, p-tolyl, benzyl, 4-t-butylphenyl and 3,5-dimethylphenyl, a halogen atom such as fluorine, chlorine, bromine and iodine, a hetero atom-containing group such as p-fluorophenyl, 3,5-difluorolphenyl, pentachlorophenyl, 3,4,5-trifluorolphenyl, pentafluorophenyl, 3,5-bis(trifluorolmethyl)phenyl and bis(trimethylsilyl)methyl and an organic metalloid group such as pentamethylantimony, trimethylsilyl, trimethylgermyl, dimethylarsine, dicyclohexylantimony and diphenylboron.

Capable of being given as the specific examples of the non-coordinate anion, that is, the conjugate base $[Z^2]^-$ of a Brensted acid alone in which pKa is -10 or less or a combination of a Brensted acid and a Lewis acid are a trifluoromethanesulfonic acid anion $(CF_3SO_3)^-$, a bis(trifluoromethanesulfonyl)methyl anion, a bis(trifluoromethanesulfonyl)benzyl anion, bis(trifluoromethanesulfonyl)amide, a perchloric acid anion $(ClO_4)^-$, a trifluoroacetic acid anion $(CF_3CO_2)^-$, a hexafluoroantimony anion $(SbF_6)^-$, a fluorosulfonic acid anion $(FSO_3)^-$, a chlorosulfonic acid anion $(ClSO_3)^-$, a fluorosulfonic acid anion/antimony pentafluoride $(FSO_3/SbF_5)^-$, a fluorosulfonic acid anion/arsenic pentafluoride $(FSO_3/AsF_5)^-$ and trifluoromethanesulfonic acid anion/antimony pentafluoride $(CF_3SO_3/SbF_5)^-$.

Capable of being given as the specific examples of the ionic compound which can be reacted with the transition metal compound of the above component (A) to form an ionic complex, that is, the (B-1) component compound are triethylammonium tetraphenylborate, tri-n-buthylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl (2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-buthylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis [bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluorophosphate, silver hexafluoroarcenate, silver perchlorate, silver trifluoroacetate and silver trifluoromethanesulfonate.

The compounds (B-1) may be used alone or in combination of two or more kinds thereof.

On the other hand, capable of being given as aluminoxane of the (B-2) component are straight chain aluminoxane represented by Formula (V):

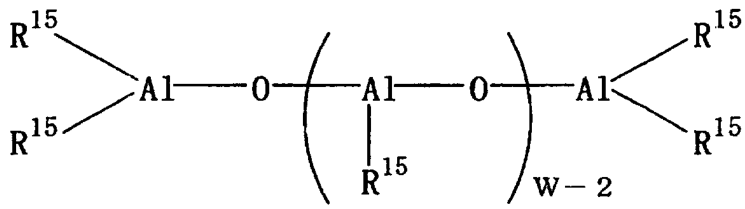

· · · (V)

(wherein $R^{15}$ represents a hydrocarbon group such as an alkyl group having 1 to 20, preferably 1 to 12 carbon atoms, an alkenyl group, an aryl group and an arylalkyl group or a hydrogen atom; w represents an average polymerization degree and is an integer of usually 2 to 50, preferably 2 to 40; respective $R^{15}$ may be the same of different) and cyclic aluminoxane represented by Formula (VI):

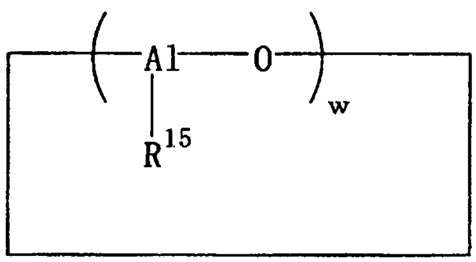

· · · (VI)

(wherein $R^{15}$ and w are the same as those in Formula (V)).

A production process for the aluminoxane described above includes a process in which alkylaluminum is brought into contact with a condensing agent such as water, but the means therefor shall not specifically be restricted, and the reaction may be carried out according to a publicly known process. It includes, for example, (1) a process in which an organic aluminum compound is dissolved in an organic solvent and in which this is brought into contact with water, (2) a process in which an organic aluminum compound is added at the beginning of polymerization and in which water is then added thereto, (3) a process in which crystal water contained in metal salts or water adsorbed on inorganic substances and organic substances is reacted with an organic aluminum compound and (4) a process in which tetraalkyldialuminoxane is reacted with trialkylaluminum and in which water is further reacted therewith. Aluminoxane which is insoluble in toluene may be used.

These aluminoxanes may be used alone or in combination of two or more kinds thereof.

A use proportion of the catalyst component (A) to the catalyst component (B) falls in arrange of preferably 10 : 1 to 1 : 100, more preferably 2 : 1 to 1 : 10 in terms of a mole ratio when the compound (B-1) is used as the catalyst component (B). If the proportion deviates from the range described above, the catalyst cost per a unit mass polymer grows high and is not practical. Also, when the compound (B-2) is used, the use proportion falls in arrange of preferably 1 : 1 to 1 : 1000000, more preferably 1 : 10 to 1 : 10000 in terms of a mole ratio. If the proportion deviates from this range, the catalyst cost per a unit mass polymer grows high and is not practical. The compounds (B-1) and (B-2) can be used alone or in combination of two or more kinds thereof for the catalyst component (B).

In the catalyst for polymerization in the production process for the 1-butene base polymer used in the present invention, an organic aluminum compound can be used as a component (C) in addition to the component (A) and the component (B).

In this case, used as the organic aluminum compound of the component (C) is a compound represented by Formula (VII):

$$R^{16}{}_{v}AlJ_{3-v} \qquad (VII)$$

(wherein $R^{16}$ represents an alkyl group having 1 to 10; J represents a hydrogen atom, an alkoxy group having 1 to 20 carbon atoms, an aryl group having 6 to 20 carbon atoms or a halogen atom; and v is an integer of 1 to 3).

The specific examples of the compound represented by Formula (VII) described above include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride and diethylaluminum sesquichloride.

These organic aluminum compounds may be used alone or in combination of two or more kinds thereof.

In the production process for the 1-butene base polymer used in the present invention, preliminary contact can be carried out by using the component (A), the component (B) and the component (C). The preliminary contact can be carried out by bringing the component (A) into contact with, for example, the component (B), but the method thereof shall not specifically be restricted, and publicly known methods can be used. This preliminary contact is effective for reducing the catalyst cost such as a rise in the catalyst activity and a reduction in a use proportion of the component (B) which is a promoter. Further, a molecular weight rise effect in addition to the effect described above is obtained by bringing the component (A) into contact with the component (B-2). The preliminary contact temperature is usually -20 to 200°C, preferably -10 to 150°C and more preferably 0 to 80°C. In the preliminary contact, aliphatic hydrocarbons and aromatic hydrocarbons can be used as an inert hydrocarbon solvent. Among them, aliphatic hydrocarbons are particularly preferred.

A use proportion of the catalyst component (A) to the catalyst component (C) falls in arrange of preferably 1 : 1 to 1 : 10000, more preferably 1 : 5 to 1 : 2000 and further preferably 1 : 10 to 1 : 1000 in terms of a mole ratio. The polymerization activity per the transition metal can be elevated by using the above catalyst component (C), but if it is too much, the organic aluminum compound is in vain and remains in the polymer in a large amount, which is not preferred.

In the present invention, at least one of the catalyst components can be carried on a suitable carrier and used. The kind of the above carrier shall not specifically be restricted, and any of inorganic oxide carriers, the other inorganic carriers and organic carriers. In particular, the inorganic oxide carriers and the other inorganic carriers are preferred.

The inorganic oxide carriers include, to be specific, $SiO_2$, $Al_2O_3$, MgO, $ZrO_2$, $TiO_2$, $Fe_2O_3$, $B_2O_3$, CaO, ZnO, BaO, $ThO_2$ and mixtures thereof, for example, silica·alumina, zeolite, ferrite and glass fiber. Among them, $SiO_2$ and $Al_2O_3$ are particularly preferred. The inorganic oxide carriers described above may contain a small amount of carbonates, nitrates and sulfates.

On the other hand, a magnesium compound represented by a formula $MgR^{17}{}_xX^1{}_y$ which is represented by $MgCl_2$ and $Mg(OC_2H_5)_2$ can be given as the carrier other than those described above, in which $R^{17}$ represents an alkyl group having 1 to 20 carbon atoms, an alkoxy group having 1 to 20 carbon atoms or an aryl group having 6 to 20 carbon atoms; $X^1$ represents a halogen atom or an alkyl group having 1 to 20 carbon atoms; x is 0 to 2; y is 0 to 2, and x + y is 2; respective $R^{17}$ and respective $X^1$ may be the same or different.

Capable of being given as the organic carrier are polymer such as polystyrene, styrene-divinylbenzene copolymers, polyethylene, poly(1-butene), substituted polystyrene and polyallylate, starch and carbon.

$MgCl_2$, $MgCl(OC_2H_5)$, $Mg(OC_2H_5)_2$, $SiO_2$ and $Al_2O_3$ are preferred as the carrier used in the present invention. The properties of the carrier are varied according to the kind and the production process thereof, and the average particle diameter is usually 1 to 300 μm, preferably 10 to 200 μm and more preferably 20 to 100 μm.

If the particle diameter is small, fine powders in the polymer are increased, and if the particle diameter is large, coarse particles in the polymer are increased, which causes a reduction in the bulk density and clogging of a hopper.

The carrier has a specific surface area of usually 1 to 1000 $m^2/g$, preferably 50 to 500 $m^2/g$ and a pore volume of usually 0.1 to 5 $cm^3/g$, preferably 0.3 to 3 $cm^3/g$.

Either the specific surface area or the pore volume deviates from the range described above, the catalyst activity is reduced in a certain case. The specific surface area and the pore volume can be determined, for example, from a volume of nitrogen gas adsorbed according to a BET method.

Further, when the carrier described above is the inorganic oxide carrier, it is preferably used after incinerated at usually 150 to 1000°C, preferably 200 to 800°C.

When at least one of the catalyst components is carried on the carrier described above, at least one of the component (A) and the component (B), preferably both of the component (A) and the component (B) are preferably carried thereon.

A method for carrying at least one of the component (A) and the component (B) on the above carrier shall not specifically be restricted, and capable of being used are, for example, (1) a method in which at least one of the component (A) and the component (B) is mixed with the carrier, (2) a method in which the carrier is treated with an organic aluminum compound or a halogen-containing silicon compound and in which at least one of the component (A) and the component (B) is then mixed with the carrier in an inert solvent, (3) a method in which the carrier and the component (A) and/or the component (B) are reacted with an organic aluminum compound or a halogen-containing silicon compound, (4) a method in which the component (A) or the component (B) is carried on the carrier and in which it is then mixed with the component (A) or the component (B), (5) a method in which a catalytic reaction product of the component (A) and the component (B) is mixed with the carrier and (6) a method in which the carrier is allowed to

coexist in the catalytic reaction of the component (A) and the component (B).

The organic aluminum compound of the component (C) can be added in the reactions in the methods (4), (5) and (6).

In the present invention, the catalyst may be prepared while irradiating with an elastic wave in bringing the components (A), (B) and (C) into contact. The elastic wave included usually a sonic wave, particularly preferably a supersonic wave. To be specific, it includes a supersonic wave having a frequency of 1 to 1000 kHz, preferably 10 to 500 kHz.

The catalyst thus obtained may be taken out in the form of a solid mater after distilling the solvent off and then used for polymerization or may be used for polymerization as it is.

In the present invention, the operation of carrying at least one of the component (A) and the component (B) on the carrier can be carried out in the polymerization system to thereby form the catalyst. Capable of being used is, for example, a method in which at least one of the component (A) and the component (B) and the carrier and, if necessary, the organic aluminum compound of the component (C) described above are added and in which olefin such as ethylene is added at an atmospheric pressure to 2 MPa (gauge) to carry out preliminary reaction at -20 to 200°C for one minute to 2 hours to thereby form catalyst particles.

In the present invention, a use proportion of the component (B-1) to the carrier is preferably 1 : 5 to 1 : 10000, more preferably 1 : 10 to 1 : 500 in terms of a mass ratio, and a use proportion of the component (B-2) to the carrier is preferably 1 : 0.5 to 1 : 10000, more preferably 1: 1 to 1 : 50 in terms of a mass ratio. When two or more kinds of the components (B) are used in a mixture, a use proportion of the respective components (B) to the carrier falls preferably in the ranges described above. Further, a use proportion of the component (A) to the carrier is preferably 1 : 5 to 1 : 10000, more preferably 1 : 10 to 1 : 500 in terms of a mass ratio.

If a use proportion of the component (B) [the component (B-1) or the component (B-2)] to the carrier or a use proportion of the component (A) to the carrier deviates from the range described above, the activity is reduced in a certain case. The catalyst for polymerization thus prepared has an average particle diameter of usually 2 to 200 μm, preferably 10 to 150 μm and particularly preferably 20 to 100 μm and a specific surface area of usually 20 to 1000 $m^2$/g, preferably 50 to 500 $m^2$/g. If the particle diameter is less than 2 μm, fine powders in the polymer are increased in a certain case. On the other hand, if it exceeds 200 μm, coarse particles in the polymer are increased in a certain case. If the specific surface area is less than 20 $m^2$/g, the activity is reduced in a certain case. On the other hand, if it exceeds 1000 $m^2$/g, the polymer is reduced in a bulk density in a certain case. Further, in the catalyst used in the present invention, an amount of the transition metal contained in the catalyst is usually 0.05 to 10 g, particularly preferably 0.1 to 2 g per 100 g of the carrier. If an amount of the transition metal falls outside the range described above, the activity is reduced in a certain case.

The polymer which is industrially advantageous and which has a high bulk density and an excellent particle diameter distribution can be obtained by carrying the components on the carrier in the manner described above.

The 1-butene base polymer used in the present invention is produced by homopolymerizing 1-butene or copolymerizing 1-butene with ethylene and/or α-olefin (excluding 1-butene) using the catalyst for polymerization described above.

In this case, the polymerization method shall not specifically be restricted, and any method of a slurry polymerization method, a gas phase polymerization method, a bulk polymerization method, a solution polymerization method and a suspension polymerization method may be used. The slurry polymerization method and the gas phase polymerization method are particularly preferred.

In respect to the polymerizing conditions, the polymerizing temperature is usually -100 to 250°C, preferably -50 to 200°C and more preferably 0 to 130°C. In respect to a use proportion of the catalyst to the reaction raw materials, the raw material monomer/the component (A) described above (mole ratio) is preferably 1 to $10^8$, particularly preferably 100 to $10^5$. Further, the polymerizing time is usually 5 minutes to 10 hours, and the polymerizing pressure is preferably an atmospheric pressure to 20 MPa (gauge), more preferably an atmospheric pressure to 10 MPa (gauge).

A method for controlling a molecular weight of the polymer includes selection of the kind, a use amount and a polymerizing temperature of the respective catalyst components and polymerization in the presence of hydrogen.

When a polymerization solvent is used, capable of being used are, for example, aromatic hydrocarbons such as benzene, toluene, xylene and ethylbenzene, alicyclic hydrocarbons such as cyclopentane, cyclohexane and methylcyclohexane, aliphatic hydrocarbons such as pentane, hexane, heptane and octane and halogenated hydrocarbons such as chloroform and dichloromethane. These solvents may be used alone or in combination of two or more kinds thereof. A monomer such as α-olefin may be used as the solvent. The polymerization can be carried out in the absence of the solvent depending on the polymerization method.

In the polymerization, preliminary polymerization can be carried out using the catalyst for polymerization described above. The preliminary polymerization can be carried out by bringing the solid catalyst component into contact with, for example, a small amount of olefin, but the method therefor shall not specifically be restricted, and publicly known methods can be used. The olefin used for the preliminary polymerization shall not specifically be restricted, and

the same ones as given above as the examples, for example, ethylene, α-olefins having 3 to 20 carbon atoms or a mixture thereof can be given. However, the same olefin as the olefin used in the above polymerization is advantageously used.

The preliminary polymerization temperature is usually -20 to 200°C, preferably -10 to 130°C and more preferably 0 to 80°C. In the preliminary polymerization, aliphatic hydrocarbons, aromatic hydrocarbons and monomers can be used as a solvent. Among them, the aliphatic hydrocarbons are particularly preferred. The preliminary polymerization may be carried out in the absence of the solvent.

In the preliminary polymerization, the conditions are preferably controlled so that the preliminary polymerization product has a limiting viscosity [η] (measured in decalin of 135°C) of 0.2 deciliter/g or more, particularly 0.5 deciliter/g or more and an amount of the preliminary polymerization product per millimole of the transition metal contained in the catalyst is 1 to 10000 g, particularly 10 to 1000 g.

[3] Wrap film

Next, the other components of the resin composition in the wrap film of the present invention shall be explained. The olefin base polymer which is the other component includes polypropylene, propylene-α-olefin copolymers, propylene-ethylene-diene copolymers, high-pressure low density polyethylene, high density polyethylene, ethylene-α-olefin copolymers having a density of 850 to 940 kg/$m^3$, ethylene-vinyl acetate copolymers, styrene base elastomers such as ethylene-styrene copolymers, styrene-butadiene diblock copolymers, styrene-butadiene-styrene triblock copolymers, styrene-isoprene diblock copolymers and styrene-isoprene-styrene triblock copolymers; and hydrogenated styrene base elastomers such as hydrogenated products of styrene-butadiene diblock copolymers, hydrogenated products of styrene-butadiene-styrene triblock copolymers, hydrogenated products of styrene-isoprene diblock copolymers and hydrogenated products of styrene-isoprene-styrene triblock copolymers. Among them, polypropylene, propylene-α-olefin copolymers and ethylene-α-olefin copolymers having a density of 850 to 940 kg/$m^3$ are preferred, and a plurality of these olefin base polymers can be used. The olefin base polymer is particularly preferably a propylene base polymer.

The resin composition constituting the wrap film of the present invention comprises 1 to 99 mass % of the 1-butene base polymer (I), (II) or (III) described above and 99 to 1 mass % of the olefin base polymer, preferably 25 to 96 mass % of the 1-butene base polymer (I), (II) or (III) described above and 75 to 4 mass % of the olefin base polymer, more preferably 40 to 92 mass % of the 1-butene base polymer (I), (II) or (III) described above and 60 to 8 mass % of the olefin base polymer and most preferably 50 to 90 mass % of the 1-butene base polymer (I), (II) or (III) described above and 50 to 10 mass % of the olefin base polymer.

In this case, if a composition ratio of the 1-butene base polymer (I), (II) or (III) described above is small, the wrap film is reduced in performances such as a flexibility, a transparency, a deformation restoring property and a wrapping property. On the other hand, if it is large, the film is inferior in a film-making stability, and it becomes difficult in a certain case to stably produce the film at a good productivity. Accordingly, the blending proportion thereof can suitably be selected primarily based on a wrapping property considering, for example, a mesopentad ratio and [η] of the 1-butene base polymer (I), (II) or (III) used and the kind, a molecular weight and a melt viscosity of the olefin base polymer.

In producing the wrap film of the present invention, publicly known various additives can be blended, if desired, with the resin composition in an amount of 0.0005 to 5 %.

Various additives blended if desired include a heat resistant stabilizer, a weatherability stabilizer, an antioxidant, a neutralizing agent, a slipping agent, an antiblocking agent, a defogging agent, a lubricant, a nucleating agent, a filler, a tackifier and an antistatic agent. These additives may be used alone or in combination of two or more kinds thereof. The antioxidant includes, for example, phosphorus base antioxidants, phenol base antioxidants and sulfur base antioxidants.

The specific example of the phosphorus base antioxidants include trisnonylphenyl phosphite, tris(2,4-di-t-buthylphenyl) phosphite, distearylpentaerythritol diphosphite, bis(2,4-di-t-buthylphenyl)pentaerythritolphosphite, bis(2,6-di-t-buthyl-4-methylphenyl)pentaerythritol phosphite, 2,2-methylenebis(4,6-di-t-buthylphenyl)octyl phosphite, tetrakis(2,4-di-t-buthylphenyl)-4,4-biphenylene-di-phosphonite, Adekastab 1178 (manufactured by Asahi Denka Co., Ltd.), Sumilizer TNP (manufactured by Sumitomo Chemical Ind. Co., Ltd.), JP-135 (manufactured by Johoku Chemical Co., Ltd.), Adekastab 2112 (manufactured by Asahi Denka Co., Ltd.), JPP-2000 (manufactured by Johoku Chemical Co., Ltd.), Weston 618 (manufactured by General Electric Company), Adekastab PEP-24G (manufactured by Asahi Denka Co., Ltd.), Adekastab PEP-36 (manufactured by Asahi Denka Co., Ltd.), Adekastab HP-10 (manufactured by Asahi Denka Co., Ltd.), Sandstab P-EPQ (manufactured by Sand Co., Ltd.) and Phosphite 168 (manufactured by Ciba Specialty Chemicals Co., Ltd.).

The specific example of the phenol base antioxidants include 2,6-di-t-buthyl-4-methylphenol, n-octadecyl-3-(3',5'-di-t-buthyl-4'-hydroxyphenyl)propionate, tetrakis[methylene-3-(3,5-di-t-buthyl-4-hydi-oxyphenyl)propionate] methane, tris(3,5-di-t-buthyl-4-hydroxybenzyl)isocyanurate, 4,4'-butylidenebis-(3-methyl-6-t-buthylphenol), triethylene

glycol-bis[3-(3-t-buthyl-4-hydroxy-5-methylphenyl)propionate], 3,9-bis{2-[3-(3-t-buthyl-4-hydroxy-5-methylphenyl) piropioniloxy]-1,1-dimethylethyl}-2,4,8,10-tetraoxaspiro[5,5]undecane, Smilizer BHT (manufactured by Sumitomo Chemical Ind. Co., Ltd.), Yoshinox BHT (manufactured by Yoshitomi Seiyaku Co., Ltd.), Antage BHT (manufactured by Kawaguchi Chemical Industry Co., Ltd.), Irganox 1076 (manufactured by Ciba Specialty Chemicals Co., Ltd.), Irganox 1010 (manufactured by Ciba Specialty Chemicals Co., Ltd.), Adekastab AO-60 (manufactured by Asahi Denka Co., Ltd.), Smilizer BP-101 (manufactured by Sumitomo Chemical Co., Ltd.), Tominox TT (manufactured by Yoshitomi Seiyaku Co., Ltd.), TTHP (manufactured by Toray Industries, Inc.), Irganox 3114 (manufactured by Ciba Specialty Chemicals Co., Ltd.), Adekastab AO-20 (manufactured by Asahi Denka Co., Ltd.), Adekastab AO-40 (manufactured by Asahi Denka Co., Ltd.), Smilizer BBM-S (manufactured by Sumitomo Chemical Ind. Co., Ltd.), Yoshinox BB (manufactured by Yoshitomi Seiyaku Co., Ltd.), Antage W-300 (manufactured by Kawaguchi Chemical Industry Co., Ltd.), Irganox 245 (manufactured by Ciba Specialty Chemicals Co., Ltd.), Adekastab AO-70 (manufactured by Asahi Denka Co., Ltd.), Tominox 917 (manufactured by Yoshitomi Seiyaku Co., Ltd.), Adekastab AO-80 (manufactured by Asahi Denka Co., Ltd.) and Smilizer GA-80 (manufactured by Sumitomo Chemical Co., Ltd.).

The specific example of the sulfur base antioxidants include dilauryl-3,3'-thiodipropionate, dimyristyl-3,3'-thiodipropionate, distearyl-3,3'-thiodipropionate, pentaerysritoltetrakis(3-laurylthiopropionate), Smilizer TPL (manufactured by Sumitomo Chemical Ind. Co., Ltd.), Yoshinox DLTP (manufactured by Yoshitomi Seiyaku Co., Ltd.), Antiox L (manufactured by NOF Corporation), Smilizer TPM (manufactured by Sumitomo Chemical Ind. Co., Ltd.), Yoshinox DMTP (manufactured by Yoshitomi Seiyaku Co., Ltd.), Antiox M (manufactured by NOF Corporation), Smilizer TPS (manufactured by Sumitomo Chemical Ind. Co., Ltd.), Yoshinox DSTP (manufactured by Yoshitomi Seiyaku Co., Ltd.), Antiox S (manufactured by NOF Corporation), Adekastab AO-412S (manufactured by Asahi Denka Co., Ltd.), SEENOX 412S (manufactured by Sipro Chemicals Co., Ltd.) and Smilizer TPS (manufactured by Sumitomo Chemical Ind. Co., Ltd.).

Among them, particularly preferred are Irganox1010: material name: pentaerythrityl-tetrakis[3-(3,5-di-t-buthyl-4-hydroxyphenyl)-propionate, Irgafos 168: material name: tris(2,4-di-t-buthylphenyl)phosphite, Irganox 1076: material name: octadecyl-3-(3,5-di-t-buthyl-4-hydroxyphenyl)propionate, Irganox 1330: material name: 1,3,5-trimethyl-2,4,6-tris(3,5,-di-t-buthyl-4-hydroxybenzyl)benzene, Irganox 3114: material name: tris(3,5-di-t-buthyl-4-hydroxybenzyl)isocyanurate and P-EPQ: material name: tetrakis(2,4-di-t-buthylphenyl)-4,4'-biphenylene-di-phosphite.

When the antioxidant is used in the present invention, it is added preferably in an amount of 0.001 to 1 mass part per 100 mass parts of the sum of the 1-butene base polymer and the olefin base polymer. This can prevent yellowing and therefore is preferred.

To give the specific use examples of the antioxidants described above, they are:

| | | |
|---|---|---|
| Example 1 | Irganox 1010 | 1,000 ppm |
| | PEP-Q | 1,000 ppm |
| Example 2 | Irganox 1076 | 1,200 ppm |
| | PEP-Q | 600 ppm |
| | Irgafos 168 | 800 ppm |
| Example 3 | Irganox 1010 | 400 to 1,000 ppm |
| | Irgafos 168 | 700 to 1,500 ppm |

Particularly preferred as the neutralizing agent are calcium stearate, zinc stearate, magnesium stearate and hydrotalcite (DHT-4A): composition formula: $Mg_{4.5}Al_2(OH)_{13}CO_3 \cdot 3.5\ H_2O$, $Li_2Al_4(OH)_{12}CO_3 \cdot 3\ H_2O$ (「Mizukalac H-1」 manufactured by Mizusawa Chemical Co., Ltd.).

Particularly preferred as the antiblocking agent are「Silysial」: synthetic silica manufactured by Fuji Silysia Co., Ltd. and「Mizukasil」: synthetic silica manufactured by Mizusawa Chemical Co., Ltd.

Particularly preferred as the slipping agent are erucamide, oleamide, stearamide, behenamide, ethylenebisstearamide, ethylenebisoleamide, stearylerucamide and oleylpalmitamide.

Capable of being given as the defogging agent are glycerin fatty acid ester compounds such as (di)glycerin mono(di, tri)oleate, (di)glycerin mono(di, tri)stearate, (di)glycerin mono(di)palmitate and (di)glycerin mono(di)laurate, sorbitan fatty acid ester compounds such as sorbitan laurate, sorbitan palmitate, sorbitan (tri)stearate and sorbitan (tri) oleate, ethylene oxide adducts such as polyoxyethylene alkyl(phenyl) ether, polyoxyethylene sorbitan monooleate and polyoxyethylene glycerin monostearate and propylene glycol fatty acid ester compounds such as propylene glycol monolaurate, propylene glycol monopalmitate, propylene glycol monostearate and propylene glycol monooleate. A plurality of these defogging agents can be used. Use of the defogging agent makes it possible to prevent fogging caused by steam coming from a wrapped article and enhance the value of a displayed product by maintaining a see-through property.

When using the nucleating agent, an addition amount of the nucleating agent falls in a range of usually 10

ppm or more, preferably 10 to 10,000 ppm, more preferably 10 to 5,000 ppm and further preferably 10 to 2,500 ppm based on the resin composition comprising the 1-butene base polymer (I), (II) or (III).

A petroleum resin, a terpene resin, a coumarone-indene resin, a rosin base resin or a hydrogenated derivative thereof can be added as the tackifier. Addition of these tackifiers makes it easy to control a stickiness in the wrap film. The petroleum resin includes alicyclic petroleum resins formed from cyclopentadiene or a dimer thereof and aromatic petroleum resins formed from C9 components, and the terpene resin includes terpene resins prepared from β-pinene and terpene-phenol resins. Capable of being given as the examples of the rosin base resin are rosin resins such as gum rosin and wood rosin and esterified rosin resins which are modified with glycerin and pentaerythritol.

The hydrogenated derivative includes hydrogenated aromatic hydrocarbon resins, hydrogenated aliphatic hydrocarbon resins, hydrogenated alicyclic hydrocarbon resins, hydrogenated aliphatic-alicyclic hydrocarbon resins and hydrogenated aliphatic·aromatic hydrocarbon resins. To be specific, it includes hydrogenated terpene resins, hydrogenated polycyclopentadiene resins and hydrogenated α-methylstyrene·vinyltoluene resins.

The resin composition forming the wrap film of the present invention can be produced by a method in which the specific 1-butene base polymer (I), (II) or (III) described above, the olefin base polymer and various additives added if necessary are added in the prescribed amounts and in which the mixture is pelletized by a conventional method, for example, by means of a melt-blending machine such as an extrusion-molding machine and a Banbury mixer.

For example, a T die molding method, an inflation molding method and a calendar molding method can be used as a method for forming the wrap film of the present invention using the composition pellets thus obtained. In a method for molding the film, the resin is heated at a molding resin temperature of 190 to 270°C, extruded and cooled, whereby the film is produced. Either of air cooling and water cooling can be used as the cooling method.

Even if the wrap film of the present invention is a non-stretched film, it has sufficiently a function as a wrap film. However, it can be biaxially stretched, if necessary, by a publicly known method. This stretching makes it possible to enhance a cutting property of the wrap film. The wrap film of the present invention has a thickness falling in a range of usually 5 to 40 μm, preferably 10 to 20 μm, and it is suitably determined considering the uses and the use forms of the wrap film.

The wrap film of the present invention is based on a single layer film comprising the resin composition described above, but it can be a multilayer film having at least one layer comprising this resin composition. The above multilayer film may be a multilayer film falling in the range of the requisites of the specific 1-butene base polymer (I), (II) or (III) used in the present invention or may be a multilayer film comprising the resin composition in which the requisites and the composition ratio are the same and in which the additive prescription is different.

Further, it can be a multilayer film comprising the resin composition layer forming the wrap film of the present invention and at least one layer formed from a resin suitably selected from the other olefin base resins. In this case, a proportion of the layer comprising the resin composition containing the specific 1-butene base polymer (I), (II) or (III) falls in a range of 1 to 99 %, preferably 20 to 80 %. The wrap film of the present invention may be a multilayer film which has at least one layer comprising only the 1-butene base polymer (I), (II) or (III) and in which the other olefin base resin layer is laminated on one face or both faces thereof. A resin suitably selected from those given as the examples in the olefin base polymer used in producing the wrap film described above can be used for the other olefin base resin in the multilayer film. Lamination of the other olefin base resin layer controls a viscoelastic characteristic of the film, improves a molding processability, an appearance, a flexibility and a tensile characteristic of the film to result in showing suited stretching and improves stretching at a low temperature. The multilayer film may be constituted from two or more layers. The wrap film has preferably a two kind-three layer structure in which the resin layer comprising the 1-butene base polymer (I), (II) or (III) is an intermediate layer and in which both surface layers are the polyolefin base resin layers.

Further preferred as the polyolefin base resin material laminated are low density polyethylene, very low density polyethylene (copolymer of ethylene and α-olefin), ethylene-vinyl acetate copolymers (EVA), ethylene-alkyl acrylate copolymers, ethylene-alkyl methacrylate copolymers, ethylene-acrylic acid copolymers, ethylene-methacrylic acid copolymers, ionomer resins and propylene base elastomer materials.

EVA and/or straight chain ethylene-α-olefin copolymers can suitably be used for the wrap film, and the proportion thereof in mixing may be optional. Suited as this EVA is a resin having a vinyl acetate content of 5 to 25 mass %, preferably 10 to 20 mass % and a melt flow rate (MFR) of 0.1 to 20 g/10 minutes, preferably 0.5 to 10 g/10 minutes which is measured at a temperature of 190°C and a load of 21.2N according to JIS K-7210. In this case, if the vinyl acetate content is less than 5 mass %, the resulting film is hard and reduced in a flexibility and an elasticity restoring property, and the surface adhesive property is less liable to be revealed in a certain case. On the other hand, if it exceeds 25 mass %, the surface adhesive property becomes too strong, and the film is liable to be reduced in a winding-off property and an appearance in a certain case.

Suited as the straight chain ethylene-α-olefin copolymer is a polymer having an α-olefin content of 1 to 40 mass %, preferably 2 to 30 mass % and a melt flow rate (MFR) of 0.1 to 20 g/10 minutes, preferably 0.5 to 10 g/10 minutes which is measured at a temperature of 190°C and a load of 21.2N according to JIS K-7210. In this case, if the

α-olefin content is less than 1 mass %, the resulting film is hard, and a uniform extensibility is less liable to be obtained in stretch wrapping, so that wrinkles are likely to be produced on the wrapped article, and the wrapped article is likely to be liable to collapse. On the other hand, if it exceeds 40 mass %, it is likely to be difficult to mold the film, and the film is likely to be reduced in a winding-off property

The α-olefin is preferably 1-butene, 1-hexene, 4-methyl-1-pentene and 1-octene which have 4 to 8 carbon atoms. They can be used alone or in combination of two or more kinds thereof. If both of EVA and the straight chain ethylene-α-olefin copolymer have an MFR of less than 0.1 g/10 minutes, the extrusion processability is reduced. On the other hand, if it exceeds 20 g/10 minutes, the film-making stability is reduced, and thickness unevenness and a reduction and a dispersion in the dynamic strength are liable to be brought about.

In both surface layer or an intermediate layer in the multilayer film of the present invention, publicly known various additives can be blended, if desired, in an amount of 0.0005 to 5 %.

Various additives blended if desired include a heat resistant stabilizer, a weatherability stabilizer, an antioxidant, a neutralizing agent, a slipping agent, an antiblocking agent, a defogging agent, a lubricant, a nucleating agent, a filler, a tackifier and an antistatic agent. The specific examples of these additives are the same as described above.

The wrap film can be provided with a strong adhesive property on an external layer by adding 3 to 6 mass % of a liquid rubber such as polybutene as a tackifier to L-LDPE (linear low density polyethylene) or EVA forming the other external layer, and therefore it is suited. A petroleum resin, a terpene resin, a coumarone-indene resin, a rosin base resin or a hydrogenated derivative thereof can be added as the tackifier. Addition of these tackifiers makes it easy to control a stickiness in the wrap film. The petroleum resin includes alicyclic petroleum resins formed from cyclopentadiene or a dimer thereof and aromatic petroleum resins formed from C9 components, and the terpene resin includes terpene resins prepared from β-pinene and terpene-phenol resins. Capable of being given as the examples of the rosin base resin are rosin resins such as gum rosin and wood rosin and esterified rosin resins which are modified with glycerin and pentaerythritol.

The hydrogenated derivative includes hydrogenated aromatic hydrocarbon resins, hydrogenated aliphatic hydrocarbon resins, hydrogenated alicyclic hydrocarbon resins, hydrogenated aliphatic-alicyclic hydrocarbon resins and hydrogenated aliphatic-aromatic hydrocarbon resins. To be specific, it includes hydrogenated terpene resins, hydrogenated polycyclopentadiene resins and hydrogenated α-methylstyrene-vinyltoluene resins.

The multilayer wrap film of the present invention has a thickness of 8 to 30 μm, preferably 10 to 20 μm. In the multilayer film, a proportion of the layer comprising the resin composition containing the 1-butene base polymer (I), (II) or (III) described above falls in a range of 1 to 99 %, preferably 20 to 80 %, and it is more preferably 30 to 70 % in terms of various characteristics and the economical efficiency.

The multilayer wrap film of the present invention is obtained by co-extruding by a multilayer die in a layer structure of a two kind-two layer, preferably two kind-three layer by means of plural extruding machines and molding by a T die molding method or an inflation molding method.

In the T die molding, the composition of a non-stretching state may be used as it is or the film may be molded by molding a raw film comprising a laminated matter and then biaxially stretching this film in both longitudinal and lateral directions. In the order of stretching, either longitudinal or lateral stretching may be carried out first, or longitudinal and lateral stretching may be carried out at the same time. The film is biaxially stretched in longitudinal and lateral directions at a stretching magnification of 2 to 5 times, preferably 2.5 to 4.5 times respectively. If this stretching magnification is less than 2 times, a cutting property of the film is unsatisfactory. On the other hand, if it is larger than 5 times, the stretching property is reduced to cause breakage or stretching unevenness on the film. Further, heat fixing may be carried out, if necessary, after stretching.

The inflation molding method is a molding method in which a resin composition is molten and extruded from an ring die, and in this case, the blow-up ratio (valve ratio/die diameter) is preferably 4 or more, particularly preferably 5 to 7. Acooling method in melt-extruding may be either of a method for cooling from an external face of a tube and a method for cooling from both of an external face and an internal face of a tube.

The wrap film of the present invention thus obtained is excellent in a safety, a flexibility, a wrapping property (an adhesive property), a transparency, a deformation restoring property, a sticking resistance and a cutting property, and it does not discharge harmful substances in disposing and incinerating and is soft to the global environment. Accordingly, the wrap film of the present invention can suitably be used as a wrap film for business use and home use in packaging resin-foamed trays for foods and preserving by freezing and refrigerating.

[4] Shrink film

Next, the other components of the resin composition in the shrink film of the present invention shall be explained. The olefin base polymer which is the other component includes the same ones as in the case of the wrap film. That is, the olefin base polymer includes polypropylene, propylene-α-olefin copolymers, propylene-ethylene-diene copolymers, high-pressure low density polyethylene, high density polyethylene, ethylene-α-olefin copolymers having a

density of 850 to 940 kg/$m^3$, ethylene-vinyl acetate copolymers and hydrogenated styrene base elastomers. Among them, polypropylene, propylene-α-olefin copolymers and ethylene-α-olefin copolymers having a density of 850 to 940 kg/$m^3$ are preferred, and a plurality of these olefin base polymers can be used. The olefin base polymer is particularly preferably a propylene base polymer.

The resin composition constituting the shrink film of the present invention comprises 1 to 99 mass % of the 1-butene base polymer (I), (II) or (III) described above and 99 to 1 mass % of the olefin base polymer, preferably 20 to 96 mass % of the 1-butene base polymer (I), (II) or (III) described above and 80 to 4 mass % of the olefin base polymer, more preferably 30 to 94 mass % of the 1-butene base polymer (I), (II) or (III) described above and 70 to 6 mass % of the olefin base polymer and most preferably 40 to 92 mass % of the 1-butene base polymer (I), (II) or (III) described above and 60 to 8 mass % of the olefin base polymer.

In this case, if a composition ratio of the 1-butene base polymer (I), (II) or (III) described above is small, deformation and breakage of the wrapped article are liable to be brought about by heat contraction of the film to reduce the performances of the shrink film such as a package appearance. On the other hand, if it is large, the film is inferior in a film-making stability and a stretching property, and it becomes difficult in a certain case to stably produce the film at a good productivity. Accordingly, the blending proportion thereof can suitably be selected primarily based on a packaging property, a film-making property and a stretching property considering, for example, a mesopentad fraction and [η] of the 1-butene base polymer (I), (II) or (III) used and the kind, a molecular weight and a melt viscosity of the olefin base polymer.

In producing the shrink film of the present invention, publicly known various additives can be blended if desired. Various additives blended if desired include an antioxidant, a neutralizing agent, a slipping agent, an antiblocking agent, a defogging agent, a lubricant, a nucleating agent or an antistatic agent. These additives may be used alone or in combination of two or more kinds thereof. The antioxidant includes, for example, phosphorus base antioxidants, phenol base antioxidants and sulfur base antioxidants.

The specific examples of the phosphorus base antioxidants, the phenol base antioxidants and the sulfur base antioxidants include the same ones as those given as the examples in the explanations of the wrap film. The same ones as in the wrap film shall apply to the specific examples of the preferred antioxidant; a use amount of the antioxidant and the specific use examples of the antioxidant.

The same ones as in the wrap film can be used as the neutralizing agent, the antiblocking agent, the slipping agent and the defogging agent. When using the nucleating agent, an addition amount of the defogging agent falls, as is the case with the wrap film, in a range of usually 10 ppm or more, preferably 10 to 10,000 ppm, more preferably 10 to 5,000 ppm and further preferably 10 to 2,500 ppm based on the resin composition comprising the 1-butene base polymer (I), (II) or (III) and the olefin base polymer.

The resin composition constituting the shrink film of the present invention can be produced by a method in which the specific 1-butene base polymer (I), (II) or (III) described above, the olefin base polymer and various additives added if necessary are added in the prescribed amounts and in which the mixture is pelletized by a conventional method, for example, by means of a melt-blending machine such as an extrusion-molding machine and a Banbury mixer.

The shrink film of the present invention can be obtained by producing a raw film for stretching by a publicly known melt extrusion-molding method using the compositional pellets thus obtained and then stretching this raw film in two longitudinal and lateral directions. Usually, a T die cast film-making method or an inflation film-making method is used for this melt extrusion-molding method to produce a raw film for stretching having a thickness falling in a range of 100 to 700 μm, preferably 200 to 500 μm. In the molding method for the raw film, the film is produced by heating the resin at a molding resin temperature of 190 to 270 °C, extruding and cooling it. Either of air cooling and water cooling can be used as the cooling method.

Next, this raw film for stretching is stretched in two longitudinal and lateral directions, that is, biaxially by a tenter method when using the T die cast film-making method and a tubular method when using the inflation film-making method. In this biaxial stretching, the film may be biaxially stretched in two longitudinal and lateral directions at the same time in the case of the tenter method or may be stretched by a multistage biaxial stretching method in which the film is stretched separately in a longitudinal direction and a lateral direction. The stretching magnifications in the longitudinal and lateral directions each are 1.5 to 20 times, preferably 2 to 17 times and more preferably 3 to 15 times. The conditions in stretching such as a heating condition and a stretching speed are suitably selected considering various physical properties of the 1-butene base polymer (I), (II) or (III), various physical properties of the olefin base polymer, a blending proportion of both polymers, a melting characteristic of the composition and a thickness and a stretching magnification of the raw film for stretching. The shrink film of the present invention can be subjected as well, if necessary, to heat treatment on suitable conditions after biaxially stretched.

The shrink film of the present invention is based on a single layer film comprising the resin composition described above, but it can be a multilayer film having at least one layer comprising this resin composition. The above multilayer film may be a multilayer film falling in the range of the requisites of the specific 1-butene base polymer (I),

(II) or (III) used in the present invention or may be a multilayer film comprising the resin composition in which the requisites and the composition ratio are the same and in which the additive prescription is different.

Further, it can be a multilayer film comprising the resin composition layer forming the shrink film of the present invention and at least one layer formed from a resin suitably selected from the other olefin base resins. In this case, a proportion of the layer comprising the resin composition containing the specific 1-butene base polymer (I), (II) or (III) falls in a range of 1 to 99 %, preferably 20 to 80 %. The characteristics of the present invention can efficiently be used by providing this layer on one external layer, and therefore it is preferred. A resin suitably selected from those given as the examples in the olefin base polymer used in producing the shrink film of the present invention can be used for the other olefin base resin in the multilayer film.

The shrink film of the present invention thus obtained is excellent in a heat shrinkability, a heat melt-sealing property, a hot slipping property, a safety, a flexibility, a shrink packaging appearance, a transparency and a breakage resistance of a wrapped article, and it does not discharge harmful substances originating in chlorine in disposing and incinerating and is soft to the global environment. Accordingly, the shrink film of the present invention can suitably be used for packaging of individual foods such as cap noodle, multiple batch packaging of yogurt put in a container, fruit-processed foods and dairy products, multiple batch packaging of canned beer and canned juice and heat shrink packaging of various articles such as notes and stationeries.

The present invention shall more specifically be explained below based on examples, but the present invention shall by no means be restricted by these example.

Production Example 1 (production of 1-butene polymer)

(1) Synthesis of complex

Synthesis of (1,2'-dimethylsilylene)(2,1'-dimethylsilylene)-bis(3-trimethylsilylmethylindenyl)-zirconium dichloride

A lithium salt 3.0 g (6.97 millimole) of (1,2'-dimethylsilylene)(2,1'-dimethylsilylene)-bis(indene) was dissolved in 50 ml of THF in a Shrenk bottle, and the solution was cooled to -78°C. Iodomethyltrimethylsilane 2.1 ml (14.2 millimole) was slowly dropwise added thereto and stirred at a room temperature for 12 hours. The solvent was distilled off, and 50 ml of ether was added thereto, followed by washing the solution with a saturated ammonium chloride solution. After separating the solution, the organic layer was dried, and the solvent was distilled off to obtain 3.04 g (5.88 millimole) of (1,2'-dimethylsilylene)(2,1'-dimethylsilylene)-bis(3-trimethylsilylmethylindene) (yield: 84 %).

Next, 3.04 g (5.88 millimole) of (1,2'-dimethylsilylene)(2,1'-dimethylsilylene)-bis(3-trimethylsilylmethylindene) obtained above and 50 ml of ether were put in a Shrenk bottle under nitrogen flow. The solution was cooled to -78°C, and 7.6 ml (11.7 millimole) of n-BuLi (hexane solution 1.54M) was added thereto, followed by stirring the solution at a room temperature for 12 hours. The solvent was distilled off, and a solid matter thus obtained was washed with 40 ml of hexane, whereby 3.06 g (5.07 millimole) of the lithium salt was obtained in the form of an ether adduct (yield: 73 %).

The result of measurement by $^1$H-NMR (90 MHz, THF-$d_8$) was:

δ 0.04 (s, 18H, trimethylsilyl), 0.48 (s, 12H, dimethylsilylen), 1.10 (t, 6H, methyl), 2.59 (s, 4H, methylene), 3.38 (q, 4H, methylene), 6.2-7.7 (m, 8H, Ar-H).

The lithium salt obtained above was dissolved in 50 ml of toluene under nitrogen flow. The solution was cooled to -78°C, and a toluene (20 ml) suspension of 1.2 g (5.1 millimole) of zirconium tetrachloride which was cooled in advance to -78°C was dropwise added thereto. After dropwise added, the solution was stirred at a room temperature for 6 hours. The solvent was distilled off from the reaction liquid, and the resulting residue was recrystallized from dichloromethane, whereby obtained was 0.9 g (1.33 millimole) of (1,2'-dimethylsilylene)(2,1'-dimethylsilylene)-bis(3-trimethylsilylmethylindenyl)zirconium dichloride (yield: 26 %).

The result of measurement by $^1$H-NMR (90 MHz, $CDCL_3$) was:

δ 0.0 (s, 18H, trimethylsilyl), 1.02, 1.12 (s, 12H, dimethylsilylene), 2.51 (dd, 4H, methylene), 7.1-7.6 (m, 8H, Ar-H).

(2) Production of 1-butene polymer

An autoclave of 10 liter which was dried by heating was charged with 4 liter of heptane, 2.5 kg of 1-butene, 10 millimole of triisobutylaluminum and 10 millimole of methylaluminoxane, and 0.05 MPa of hydrogen was further introduced thereinto. The temperature was raised to 60°C while stirring, and then added thereto was 10 micromole of (1.33 millimole) of (1,2'-dimethylsilylene)(2,1'-dimethylsilylene)-bis(3-trimethylsilylmethylindenyl)zirconium dichloride of the catalyst prepared in (1) described above to carry out polymerization for 60 minutes. After finishing the polymerization reaction, the reaction product was dried under reduced pressure to thereby obtain 990 g of a 1-butene polymer. The following evaluation results of the resin characteristics of the 1-butene polymer thus obtained were as follows.

| | |
|---|---|
| Mesopentad fraction (mmmm): mol % | 71.6 |
| Racemitriad fraction (rr): mol % | 4.6 |
| 91-2 × (rr) | 80.8 |
| Abnormal insertion amount (1,4 insertion fraction): mol % | 0 |
| Stereospecific index (mmmm)/(mmrr + rmmr) | 8 |
| Weight average molecular weight (Mw) | $51 \times 10^4$ |
| Molecular weight distribution (Mw/Mn) | 2.0 |
| Melting point (Tm-P: DSC measurement): °C | not observed |
| Melt endothermic amount (ΔH-P): J/g | not observed |
| Melting point (Tm-D: DSC measurement): °C | 73 |
| Melt endothermic amount (ΔH-D): J/g | 35 |
| CII:% | 0 |

The resin characteristics describe above were measured in the following manners.

(1) Measurement of mesopentad fraction, racemitriad fraction and abnormal insertion amount

Measured by the methods described in the present specification.

(2) Measurement of weight average molecular weight (Mw) and molecular weight distribution (Mw/Mn)

Measured by the methods described in the present specification.

(3) DSC measurement (melting point: measurement of Tm-P and Tm-D)

Designated as ΔH-P was a melting endothermic amount obtained by melting 10 mg of the sample at 190°C for 5 minutes under nitrogen atmosphere by means of a differential scanning calorimeter (DSC-7 manufactured by Perkin Elmer Co., Ltd.), then lowering the temperature down to -10°C at 5°C/minute, holding the sample at -10°C for 5 minutes and then elevating the temperature at 10°C/minute. A peak top of a peak observed at a highest temperature side in the melt endothermic curve thus obtained was designated as the melting point: Tm-P.
Designated as ΔH-D was a melting endothermic amount obtained by holding 10 mg of the sample at -10°C for 5 minutes under nitrogen atmosphere by means of the differential scanning calorimeter (DSC-7 manufactured by Perkin Elmer Co., Ltd.) and then elevating the temperature at 10°C/minute. A peak top of a peak observed at a highest temperature side in the melt endothermic curve thus obtained was designated as the melting point: Tm-D.

(4) Measurement of II type crystal ratio (CII)

Measured by the methods described in the present specification.

Examples 1 to 4

(1) Production of pellets

A phenol base antioxidant: Irganox 1010: 500 ppm and a phosphorus base antioxidant: Irgafos 168:1000 ppm were added to the 1-butene polymer obtained above, and the polymer was extrusion-molded at a resin temperature of 200°C by means of a uniaxial extrusion-molding machine (TLC35-20 type, manufactured by Tsukada Juki Mfg. Co., Ltd.) to obtain pellets.

(2) Production of wrap film

The pellets obtained in (1) described above were dry-blended with IDEMITSU PP (polypropylene) F-704NP (melt flow rate: 7 g/10 minutes) and F-734NP (melt flow rate: 6 g/10 minutes) manufactured by Idemitsu Petrochemical Co., Ltd. in a proportion shown in Table 1. Next, a wrap film having a thickness of 20 µm was obtained on film-making conditions described below by means of a VS40 extruding machine and a T die cast molding machine manufactured by Tanabe Plastic Machinery Co., Ltd.

Film-making conditions

Die outlet resin temperature: 230°C
Chilled roll temperature: 30°C
Haul-off speed: 18 m/minute

(3) Evaluation of wrap film

All the wrap films thus obtained were conditioned at a temperature of 23 ± 2°C and a humidity of 50 ± 10 % for 16 hours or longer to evaluate the following items at the same temperature and the same humidity. The evaluation results are shown in Table 1.

(1) Transparency (haze)

Measured according to JIS K 7105.

(2) Tensile yield strength and tensile elastic modulus

Measured by a tensile test according to JIS K 7127.

Crosshead speed: 50 mm/minute
Measuring direction: machine direction (MD direction)

(3) Wrapping property 1

A stainless vat (inner dimension: 125 × 180 × depth: 70 mm) was wrapped with the wrap film cut to 160 × 220 mm. A case in which the film was not peeled off after left standing at 5°C for one week and in which the wrapping state was maintained was judged as ◎ , and a case other than it was judged as ×.

(4) Wrapping property 2

The wrap film cut to 160 × 170 mm was put on the mouth of the vat described above apart from the short side by 30 mm and 50 mm to stick the edge of the film closely to the angular vat. Subsequently, the film was drawn in order from the central end part to try to cover the aperture part. A case in which wrapping was succeeded in both of 30 mm and 50 mm and could be completed was judged as ◎ ; a case in which wrapping was succeeded only in 30 was judged as ○; and a case in which wrapping was failed in both was judged as ×.

(5) Sticking resistance

The angular vat was wrapped with the film as was the case with the wrapping property 1, and subsequently the central part thereof was slowly stuck with a finger. A case in which the film was not broken until the finger reached the bottom of the angular vat was judged as ◎ , and a case other than it was judged as ×.

(6) Deformation (elasticity) restoring property

A dice having a side of 45 mm was put on the central part of the same angular vat as used in the wrapping property 1, and the vat was wrapped by the same procedure as in the wrapping property 1. Subsequently, the central part of the film was slowly stuck with a finger, and when the finger reached the dice put on the bottom, the finger was separated from the film to observe the state after 3 minutes. A case in which the film was restored as it was before was judged as ◎ , and a case in which a bag-like mark remained was judged as ×.

Comparative Example 1

A commercial polyvinylidene chloride-made film (brand name: Saran Wrap R, manufactured by Asahi Chemicals Ind. Co., Ltd.) was evaluated in the same manner as in Example 1. The result thereof is shown in Table 1.

Table 1

| Composition ratio (mass %) | | Example | | | | Comparative Example 1 |
|---|---|---|---|---|---|---|
| | | 1 | 2 | 3 | 4 | |
| 1-Butene polymer | | 70 | 70 | 90 | 50 | — |
| Olefin base polymer | F-704NP | 30 | — | 10 | 50 | — |
| | F-734NP | — | 30 | — | — | — |
| Evaluation of wrap film | Haze (%) | 0.4 | 0.4 | 0.6 | 0.6 | 0.3 |
| | Tensile elastic modulus (MPa) | 210 | 210 | 180 | 320 | 1250 |
| | Tensile yield strength (MPa) | 10.2 | 9.8 | 8.9 | 12.5 | * |
| | Wrapping property 1 | ◎ | ◎ | ◎ | ◎ | ◎ |
| | Wrapping property 2 | ◎ | ◎ | ◎ | ○ | × |
| | Sticking resistance | ◎ | ◎ | ◎ | ◎ | × |
| | Deformation restoring property | ◎ | ◎ | ◎ | ◎ | × |

*: The yield point was not found

Examples 5 to 7 and Comparative Example 2

(1) Production of pellets

The phenol base antioxidant: Irganox 1010: 500 ppm was added to the 1-butene polymer obtained in Production Example 1, and the polymer was extrusion-molded at a resin temperature of 200°C by means of a biaxial extrusion-molding machine (laboplast mill, manufactured by Toyo Seiki Mfg. Co., Ltd.) to obtain pellets.

(2) Production of multilayer wrap film

EVA (ethylene-vinyl acetate copolymer) of V425 (MFR: 9 g/10 minutes, vinyl acetate content: 10 mass %) manufactured by Mitsui Du Pont Polychemical Co., Ltd. was used as a material for forming both surface layers. Used as a material for forming an intermediate layer was a composition obtained by dry-blending the pellets obtained in (1) described above with IDEMITSU PP (polypropylene) F-744NP (MFR: 7 g/10 minutes) manufactured by Idemitsu Petrochemical Co., Ltd. in a proportion shown in Table 2. The material for forming both surface layers and the material for forming an intermediate layer were introduced into separate uniaxial extruding machines (a surface layer extruding machine: manufactured by Tanabe Plastic Co., Ltd. and an intermediate layer extruding machine: manufactured by Rikua Co., Ltd.) to plasticize and knead the respective raw materials by heating, and then they were co-extruded from a co-extrusion three layer T die. The laminated film extruded was received by means of a haul off equipment so that a laminated film of a thickness 15 μm having a constitution shown in Table 2 was obtained to prepare a two kind-three layer film. The film-making conditions are described below.

Film-making conditions

Surface layer extruding machine: 30 mm ϕ
Intermediate layer extruding machine: 30 mm ϕ
Molding temperature: 220°C
Chilled roll temperature: 25°C

(3) Evaluation of multilayer wrap film

All the wrap films thus obtained were conditioned at a temperature of 23 ± 2°C and a humidity of 50 ± 10 % for 16 hours or longer to evaluate the items other than a permanent elongation percentage by the same methods as

described above and the permanent elongation percentage by a method described below at the same temperature and the same humidity. The evaluation results are shown in Table 2. The films prepared in Examples 5 to 7 have a good molding property, and the films obtained have a low permanent elongation percentage and are excellent in a deformation restoring property and an adhesive property.

(1) Permanent elongation percentage

Measured by means of an autograph manufactured by Toyo Seiki Co., Ltd. A strip cut out from the molded film in an MD direction (machine direction) in a size of 200 mm × 15 mm was used as a test piece. Reference lines were marked on the test piece at an interval of 100 mm; an interval between the chucks was set to 150 mm; and the film was extended by 50 mm from this point at a speed of 500 mm/minute and held as it was for 30 seconds. Then, the chucks were restored to the former position at a speed of 20 mm/minute to measure a distance (L) (mm) between the reference lines in the test piece when the load was 0. The permanent elongation percentage (Pr) (%) is defined as follows:

$$Pr = [(L - 100)/100] \times 100$$

The smaller value of this Pr shows that the restoring property to deformation is higher, and it is preferred for the wrap film.

Table 2

| | | Example | | | Comparative Example 2 |
|---|---|---|---|---|---|
| | | 5 | 6 | 7 | |
| Both surface layer | | EVA | EVA | EVA | EVA |
| Composition ratio of intermediate layer (mass %) | Pellet of (1) | 100 | 68 | 30 | — |
| | PP | 0 | 32 | 70 | 100 |
| Thickness (μm) of respective layers (surface layer/intermediate layer/ surface layer) | | 5/5/5 | 5/5/5 | 5/5/5 | 5/5/5 |
| Evaluation of wrap film | Tensile elastic modulus (MPa) | 134 | 149 | 173 | 177 |
| | Permanent elongation percentage (%) | 9 | 10 | 11 | 14 |
| | Wrapping property 1 | ◎ | ◎ | ◎ | ◎ |
| | Wrapping property 2 | ◎ | ◎ | ○ | × |
| | Sticking resistance | ◎ | ◎ | ◎ | × |
| | Deformation restoring property | Δ | Δ | Δ | × |

Comparative Example 3

The same pellets as used in Example 5 were used to prepare a film by a monolayer T die method, but winding on the roll was caused, and a film having a thickness of 15 μm could not be prepared.

Examples 8 to 11

(1) Production of pellets

The phenol base antioxidant: Irganox 1010 (manufactured by Ciba Specialty Chemicals Co., Ltd.): 1000 ppm and a phosphorus base antioxidant: P-EPQ (manufactured by Ciba Specialty Chemicals Co., Ltd.): 500 ppm were added to the 1-butene polymer obtained in Production Example 1, and the polymer was extrusion-molded at a resin temperature of 200°C by means of the uniaxial extrusion-molding machine (TLC35-20 type, manufactured by Tsukada Juki Mfg. Co., Ltd.) to obtain pellets.

(2) Production of raw film

The pellets obtained in (1) described above, IDEMITSU PP (polypropylene) F-300S (melt flow rate: 3 g/10 minutes) manufactured by Idemitsu Petrochemical Co., Ltd. and a propylene base random copolymer R-PP (melt flow rate: 2.3 g/10 minutes, ethylene content: 4.2 mass %, melting point: 137°C) produced by a method described in Example-1 of Japanese Patent Application Laid-Open No. 152531/1998 were dry-blended in a proportion (mass %) shown in Table 3. Next, a tubular raw film having a thickness of 240 μm was produced at a die outlet temperature of 230°C by means of three 40 mm ϕ extruding machines and a one kind-three layer down-blowing water-cooled film-making machine equipped with a 50 mm ϕ circular dice.

(3) Production of stretched shrink film

The raw film obtained in (2) described above was biaxially stretched at the same time at a stretching temperature of 100 to 120°C and a stretching magnification of 6 times in a longitudinal direction and 5 times in a lateral direction by means of a tubular type simultaneous biaxial stretching film-making machine in which two sets of upper and lower nip rolls were disposed and in which a heating furnace comprising a pre-heater and a main heater was provided between the upper and lower nip rolls to produce a stretched film. Further, the stretched film thus obtained was subjected to heat treatment at 70°C for 10 seconds by means of the stretching apparatus described above to obtain a shrink film having a thickness of 12 μm. The shrink film was evaluated by the following methods. The evaluation results thereof are shown in Table 3.

(4) Evaluation of shrink film

All the shrink films thus obtained were conditioned at a temperature of 23 ± 2°C and a humidity of 50 ± 10 % for 16 hours or longer to evaluate the following items. The evaluation results thereof are shown in Table 3.

① Transparency (haze)

Measured according to JIS K 7105.

② Shrink packaging appearance

A commercial rectangular ready-to-eat Chinese noodle (chow mein) was packaged with the shrink film obtained above leaving a little space to seal an aperture part by hot fusing. This was put on a conveyor and passed through an NS-350 type hot air circulating type heating furnace manufactured by Kyowa Electric Co., Ltd. to shrink the film. A size of the edge-rising part after heat shrink and an amount of wrinkles generated at the corner part were visually evaluated.

③ Hot slipping property

Evaluated by the presence of blocking caused when the shrink-packaged articles of the ready-to-eat Chinese noodle obtained in (2) described above were put together to each other at the outlet of the heating furnace and an easiness in passing through when transported on the conveyor as they were put together.

④ Heat shrink stress

An article was packaged with the shrink film in the same manner as in (2) described above to obtain a packaged article, except that it was packaged leaving little space. Then, it was visually observed and evaluated as ○ in a case where no deformation was caused and as × in the other cases than it.

In Comparative Example 4, a film was produced from IDEMITSU PP F-300S alone manufactured by Idemitsu Petrochemical Co., Ltd. as a polypropylene resin. In Comparative Example 5, a film was produced from R-PP alone used in Examples 10 and 11.

Table 3

| Composition ratio (mass %) | | Example | | | | Comparative Example | |
|---|---|---|---|---|---|---|---|
| | | 8 | 9 | 10 | 11 | 4 | 5 |
| 1-Butene polymer | | 70 | 50 | 70 | 50 | - | - |
| Olefin base polymer | F-300S | 30 | 50 | - | - | 100 | - |
| | R-PP | - | - | 30 | 50 | | 100 |
| Evaluation of shrink film | Haze (%) | 0.5 | 0.4 | 0.6 | 0.4 | 0.5 | 2.0 |
| | Gloss (%) | 148 | 147 | 142 | 140 | 146 | 127 |
| | Shrink packaging appearance | Good | Good | Good | Good | Bad | Good |
| | Hot slipping property | Good | Good | Good | Good | Good | Good |
| | Heat shrink stress | ○ | ○ | ○ | ○ | × | × |

INDUSTRIAL APPLICABILITY

The wrap film of the present invention is not likely to generate toxic substances such as hydrogen chloride originating in chlorine in disposing and incinerating and is soft to the global environment and safe, and it is equal in a transparency, a sticking resistance and a deformation restoring property to a wrapping film made of a polyvinyl chloride resin which is used in a large quantity at present or more excellent in characteristics such as a sticking resistance and a deformation restoring property than the above wrapping film.

Also, the shrink film of the present invention does not contain chlorine and therefore is not likely to generate toxic substances such as hydrogen chloride originating in chlorine in disposing and incinerating. Further, it does not use a plasticizer and therefore does not cause troubles by elution of the plasticizer in use, so that it is safe and soft to the global environment. Also, it is excellent in a heat shrink property in a packaging work, a low temperature shrink property, a solvent-breaking resistance, a heat melt-sealing property, a hot slipping property and a package appearance after packaging (no wrinkles produced and fine sticking at edges). Further, it stays in a markedly higher level of a transparency and a glossiness than a conventional polyolefin base resin shrink film and makes it possible to provide a shrink packaged article which is excellent in a product value, and the application fields thereof are expected to be expanded further more.

**Claims**

**1.** A wrap film formed from a resin composition comprising 1 to 99 mass % of a 1-butene base polymer satisfying the following items (1) to (4):

(1) a crystalline resin in which a melting point (Tm-D) defined as a peak top of a peak observed at a highest temperature side in a melting endothermic curve obtained by holding a sample at -10°C for 5 minutes under nitrogen atmosphere by means of a differential scanning calorimeter (DSC) and then elevating the temperature at 10°C/minute is 0 to 100°C;
(2) a stereospecific index {(mmmm)/(mmrr + rmmr)} is 20 or less;
(3) a molecular weight distribution (Mw/Mn) measured by a gel permeation chromatography (GPC) method is 4.0 or less; and
(4) a weight average molecular weight (Mw) measured by the GPC method is 10,000 to 1,000,000

and 99 to 1 mass % of an olefin base polymer.

**2.** A wrap film formed from a resin composition comprising 1 to 99 mass % of a 1-butene base polymer satisfying the following items (1') to (4'):

(1') a crystalline resin in which a melting point (Tm-P) defined as a peak top of a peak observed at a highest temperature side in a melting endothermic curve obtained by melting a sample at 190°C for 5 minutes under

nitrogen atmosphere by means of a differential scanning calorimeter (DSC), then lowering the temperature down to -10°C at 5°C/minute, holding the sample at -10°C for 5 minutes and then elevating the temperature at 10°C/minute is not observed or 0 to 100°C;
(2') a stereospecific index {(mmmm)/(mmrr + rmmr)} is 20 or less;
(3') a molecular weight distribution (Mw/Mn) measured by a gel permeation chromatography (GPC) method is 4.0 or less; and
(4') a weight average molecular weight (Mw) measured by the GPC method is 10,000 to 1,000,000

and 99 to 1 mass % of an olefin base polymer.

**3.** A wrap film formed from a resin composition comprising 1 to 99 mass % of a 1-butene base polymer satisfying the following items (5) and (6):

(5) a 1-butene homopolymer or a copolymer of 1-butene and ethylene and/or α-olefin having 3 to 20 carbon atoms (excluding 1-butene), wherein a structural unit originating in 1-butene accounts for 90 mole % or more and
(6) a II type crystal ratio (CII) obtained by melting a sample at 190°C for 5 minutes, rapidly cooling it with ice and water and solidifying, leaving standing at a room temperature for one hour and then analyzing by X ray diffraction is 50 % or less

and 99 to 1 mass % of an olefin base polymer.

**4.** A shrink film formed from a resin composition comprising 1 to 99 mass % of a 1-butene base polymer satisfying the following items (1) to (4):

(1) a crystalline resin in which a melting point (Tm-D) defined as a peak top of a peak observed at a highest temperature side in a melting endothermic curve obtained by holding a sample at -10°C for 5 minutes under nitrogen atmosphere by means of a differential scanning calorimeter (DSC) and then elevating the temperature at 10°C/minute is 0 to 100°C;
(2) a stereospecific index {(mmmm)/(mmrr + rmmr)} is 20 or less;
(3) a molecular weight distribution (Mw/Mn) measured by a gel permeation chromatography (GPC) method is 4.0 or less; and
(4) a weight average molecular weight (Mw) measured by the GPC method is 10,000 to 1,000,000

and 99 to 1 mass % of an olefin base polymer.

**5.** A shrink film formed from a resin composition comprising 1 to 99 mass % of a 1-butene base polymer satisfying the following items (1') to (4'):

(1') a crystalline resin in which a melting point (Tm-P) defined as a peak top of a peak observed at a highest temperature side in a melting endothermic curve obtained by melting a sample at 190°C for 5 minutes under nitrogen atmosphere by means of a differential scanning calorimeter (DSC), then lowering the temperature down to -10°C at 5°C/minute, holding the sample at -10°C for 5 minutes and then elevating the temperature at 10°C/minute is not observed or 0 to 100°C;
(2') a stereospecific index {(mmmm)/(mmrr + rmmr)} is 20 or less;
(3') a molecular weight distribution (Mw/Mn) measured by a gel permeation chromatography (GPC) method is 4.0 or less; and
(4') a weight average molecular weight (Mw) measured by the GPC method is 10,000 to 1,000,000

and 99 to 1 mass % of an olefin base polymer.

**6.** A shrink film formed from a resin composition comprising 1 to 99 mass % of a 1-butene base polymer satisfying the following items (5) and (6):

(5) a 1-butene homopolymer or a copolymer of 1-butene and ethylene and/or α-olefin having 3 to 20 carbon atoms (excluding 1-butene), wherein a structural unit originating in 1-butene accounts for 90 mole % or more and
(6) a II type crystal ratio (CII) obtained by melting a sample at 190°C for 5 minutes, rapidly cooling it with ice

and water and solidifying, leaving standing at a room temperature for one hour and then analyzing by X ray diffraction is 50 % or less

and 99 to 1 mass % of an olefin base polymer.

7. The wrap film as described in any of claims 1 to 3, wherein the 1-butene base polymer is polymerized using a metallocene catalyst comprising a transition metal compound in which a cross-linking structure is formed via two cross-linking groups and a promoter.

8. The wrap film as described in any of claims 1 to 3, wherein the olefin base polymer is a propylene base polymer.

9. A multilayer wrap film having at least one layer comprising the resin composition as described in any of claims 1 to 3.

10. A multilayer film having at least one layer comprising the 1-butene polymer as described in any of claims 1 to 3.

11. A wrap film comprising the multilayer film as described in claim 10.

12. The shrink film as described in any of claims 4 to 6, wherein the 1-butene base polymer is polymerized using a metallocene catalyst comprising a transition metal compound in which a cross-linking structure is formed via two cross-linking groups and a promoter.

13. The shrink film as described in any of claims 4 to 6, wherein the olefin base polymer is a propylene base polymer.

14. A multilayer shrink film having at least one layer comprising the resin composition as described in any of claims 4 to 6.

## INTERNATIONAL SEARCH REPORT

International application No.
PCT/JP02/09500

A. CLASSIFICATION OF SUBJECT MATTER
Int.Cl[7] C08L23/20, C08L23/00, C08F4/642, C08J5/18, B32B27/32

According to International Patent Classification (IPC) or to both national classification and IPC

B. FIELDS SEARCHED
Minimum documentation searched (classification system followed by classification symbols)
Int.Cl[7] C08L23/00-23/36, C08F4/64-4/69, C08J5/18, B32B27/00-27/42

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| A | JP 6-136149 A (Riken Vinyl Industry Co., Ltd.), 17 May, 1994 (17.05.94), Full description (Family: none) | 1-14 |
| A | JP 6-122182 A (Mitsubishi Kasei Corp.), 06 May, 1994 (06.05.94), Full description (Family: none) | 1-14 |
| A | JP 11-43564 A (Idemitsu Petrochemical Co., Ltd., Neste Oy), 16 February, 1999 (16.02.99), Full description (Family: none) | 1-14 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
05 December, 2002 (05.12.02)

Date of mailing of the international search report
17 December, 2002 (17.12.02)

Name and mailing address of the ISA/
Japanese Patent Office

Facsimile No.

Authorized officer

Telephone No.

Form PCT/ISA/210 (second sheet) (July 1998)

**INTERNATIONAL SEARCH REPORT**

International application No.
PCT/JP02/09500

C (Continuation). DOCUMENTS CONSIDERED TO BE RELEVANT

| Category* | Citation of document, with indication, where appropriate, of the relevant passages | Relevant to claim No. |
|---|---|---|
| A | EP 573172 A1 (Mitsui Petrochemical Industries, Ltd.),<br>08 December, 1993 (08.12.93),<br>Full description<br>& CA 2096581 A1 & EP 573173 A1<br>& JP 6-32952 A & CN 1082072 A<br>& JP 6-65448 A & CN 1083770 A<br>& US 5338792 A1 & US 5382620 A1<br>& KB 9607763 B & KR 9607764 B | 1-14 |
| A | JP 2000-63597 A (Asahi Chemical Industry Co., Ltd.),<br>29 February, 2000 (29.02.00),<br>Full description<br>& JP 2000-62113 A | 1-14 |
| A | JP 10-272747 A (Kohjin Co., Ltd.),<br>13 October, 1998 (13.10.98),<br>Full description<br>(Family: none) | 1-14 |
| A | EP 621310 A1 (Mitsui Petrochemical Industries, Ltd.),<br>26 October, 1994 (26.10.94),<br>Full description<br>& CA 2121639 A1 & JP 6-306224 A | 1-14 |
| A | JP 6-79838 A (Showa Denko Kabushiki Kaisha),<br>22 March, 1994 (22.03.94),<br>Full description<br>(Family: none) | 1-14 |
| A | JP 5-104624 A (Mitsubishi Petrochemical Co., Ltd.),<br>27 April, 1993 (27.04.93),<br>Full description<br>(Family: none) | 1-14 |
| A | JP 8-225605 A (Mitsui Petrochemical Co., Ltd.),<br>03 September, 1996 (03.09.96),<br>Full description<br>(Family: none) | 1-14 |

Form PCT/ISA/210 (continuation of second sheet) (July 1998)